# EUROPEAN PATENT APPLICATION

(11) **EP 4 534 162 A1**
(43) Date of publication of application: **09.04.2025**
(21) Application number: 24732377.7
(22) Date of filing: 28.05.2024
(51) Int. Cl.: A63F 13/355, A63F 13/493, A63F 13/2145, A63F 13/235, G06F 3/14, H04N 21/43, H04N 21/436, H04N 21/478

(54) **METHOD AND DEVICE FOR SUPPORTING GAME PLAY IN ELECTRONIC DEVICE**

(30) Priority: 22.08.2023 KR 20230109814
(71) Applicant: Samsung Electronics Co., Ltd., Suwon-si, Gyeonggi-do 16677 (KR)
(72) Inventor: OH, Seungbin, Suwon-si, Gyeonggi-do 16677 (KR); KANG, Donghun, Suwon-si, Gyeonggi-do 16677 (KR); LEE, Sangyoon, Suwon-si, Gyeonggi-do 16677 (KR); JUNG, Jingun, Suwon-si, Gyeonggi-do 16677 (KR); LEE, Youngah, Suwon-si, Gyeonggi-do 16677 (KR)
(74) Representative: Walaski, Jan Filip
(86) International application number: PCT/KR2024/007219
(87) International publication number: WO 2025/041976

(57) **Abstract**

A method for supporting game play in a first electronic device comprises obtaining a request for a game control interface to support a touch interactionwhile a game is being played, mirroring a game control interface screen associated with the game control interfaceto a second electronic device, in response to the request and applying a first input signal provided in response to a touch input at the second electronic device to control the game.

## Description

### [Technical Field]

The disclosure relates to a method and device for supporting game play in an electronic device.

### [Background Art]

With the development of gaming industry and advancement in technology, various types of games are being introduced. For example, a cross platform game that runs on multiple platforms (e.g., personal computer (PC), game console, smartphone or tablet), allowing users to play the same game on different devices or platforms based on different operating systems. Another example is a cloud game that runs on a server without being downloaded or installed on user equipment (UE) (e.g., smartphone, television (TV) or PC). The game may be received by the UE from the server through a real-time streaming scheme for user's play. The cloud game allows the user to experience high-quality game play without having to download and execute a high-specification game on the UE.

Various types of games, including the cross-platform game and the cloud game, may be played using a gamepad (or game controller). The gamepad is an input device for controlling the game and may include a joystick and/or one or more buttons specialized for game play. The gamepad may be connected to the UE and controlled and may provide a sense of immersion when controlling the game.

### [Disclosure]

### [Technical Problem]

The user may control various interfaces associated with a game when playing the game. However, given the features of the gamepad, the use of the control on the gamepad inevitably increases. For example, the user may be required to press a button on the gamepad multiple times or for an extended period of time in order to change a position of a character to a desired or a different position on the game screen.

Meanwhile, diversified game environments allow users to play games using various devices. However, it is impossible to seamlessly play a game on various devices. For example, a user must end the game currently playing on one device in order to start playing it on another device. This causes inconvenience to the user.

### [Technical Solution]

An embodiment of the disclosure may provide a method and device for supporting game play in an electronic device.

An embodiment of the disclosure may provide a method and device for allowing a second electronic device to mirror a screen displayed on a first electronic device while a game is running.

An embodiment of the disclosure may provide a method and device in which a first electronic device transmits data for screen mirroring to a second electronic device and displays the same screen or a different screen as/from that of the second electronic device.

An embodiment of the disclosure may provide a method and device in which a first electronic device displays a main play screen for a game play, and a second electronic device displays a game control interface screen based on a touch interaction.

An embodiment of the disclosure may provide a method and device in which a first electronic device may simultaneously connect to a first input device, such as an input device, and a second input device supporting touch interaction, such as a second electronic device.

An embodiment of the disclosure may provide a method and device in which a first electronic device changes input information related to game play in a game environment into a type of information processable by a game server.

An embodiment of the disclosure may provide a method and device that allows a screenshot image displayed on a second electronic device when playing game through a first electronic device by displaying a screenshot image of a game screen obtained by the first electronic device to the second electronic device.

An embodiment of the disclosure may provide a method and device for allowing a game used to be played on a first electronic device to be seamlessly played on a second electronic device.

A method for supporting game play at a first electronic device (110), according to an embodiment of the disclosure, may comprise obtaining (1402) a request for a game control interface to support a touch interaction while a game is playing, mirroring (1404) a game control interface screen (500) associated with the game control interface to a second electronic device (130), in response to the use request, and applying (1406) a first input signal provided in response to a touch input at the second electronic device (130) to control the game.

According to an example embodiment, wherein obtaining the request may comprise outputting a game screen at the first electronic device (110), determining whether the game screen is the game control interface screen (500), transmitting (216, 310, 414) a mirroring request to the second electronic device (130) based on the game screen being the game control interface screen (500), and receiving (232, 314, 426) a response to the mirroring request from the second electronic device (130).

According to an example embodiment, the method may further comprise pausing (316) the game screen based on receiving the response to the mirroring request.

According to an example embodiment, wherein determining whether the game screen is the game control interface screen (500) may be based on determining whether the game screen includes items of a specific shape arranged to form a repeated pattern or whether the game screen includes an item requiring a input or selection.

According to an example embodiment, wherein applying the first input signal to control the game may comprise transferring (322) the first input signal to a game server (140), and outputting (316) a game screen based on game information received from the game server (140) in response to the first input signal.

According to an example embodiment, the method may further comprise receiving (256, 448) a mirroring end request from the second electronic device (130), and terminating (258, 450) mirroring of the game control interface screen (500) to the second electronic device (130) in response to receiving the mirroring end request.

According to an example embodiment, wherein applying the first input signal to control the game may comprise converting the first input signal into a second input signal supported by an input device (120) incapable of touch input, and controlling the game based on the second input signal.

According to an example embodiment, wherein converting the first input signal into the second input signal may comprise detecting (602) a repeated pattern formed by arrangement of items of a specific shape in a repeated structure on the game control interface screen (500), identifying (604) a type of a list formed by the detected repeated pattern, obtaining (610, 702) a focused position in the identified type of the list, obtaining (706) a first focus position based on the first input signal in the identified type of the list, generating (710) key input information based on information about a key controllable in the identified type of the list, the focused position, or the first focus position, and generating (716) the second input signal based on the generated key input information.

According to an example embodiment, wherein generating the second input signal may comprise comparing (712) a second focus position based on the generated key input information with the first focus position, based on the second focus position corresponding to the first focus position, generating (716) the second input signal based on the generated key input information, and based on the second focus position not corresponding to the first focus position, repeating (718) the conversion of the first input signal into the second input signal a preset number of times or transmitting (720) a message indicating that touch input processing is impossible, to the second electronic device (130).

According to an example embodiment, the method may further comprise receiving (810, 908) a screenshot request signal from the second electronic device (130), obtaining (812, 910) a screenshot image by capturing a game screen displayed on the first electronic device (110) based on the screenshot request signal, and transmitting (814, 912) the obtained screenshot image to the second electronic device (130).

According to an example embodiment, the method may further comprise receiving (1024) a continue game request signal from the second electronic device (130), transmitting (1026) a platform switch request signal including information about the second electronic device (130) to middleware (160) connected with the first electronic device (110) and a game server (140) to switch a platform for playing the game from the first electronic device (110) to the second electronic device (130) based on the continue game request signal, and based on (1028) a response signal to the platform switch request signal being received from the middleware (160), terminating the connection with the middleware (160) and transmitting (1038) connection information for connecting with an input device (120) incapable of touch input to the second electronic device (130).

According to an example embodiment, the method may further comprise mirroring (1214) a game play screen associated with the game to the second electronic device (130), receiving (1218) a second input signal from an input device (120) incapable of touch input, obtaining (1220) a game play screen updated based on the second input signal, and mirroring (1222) the updated game play screen to the second electronic device (130).

A first electronic device (110) according to an embodiment of the disclosure may comprise a display (1508), a transceiver (1506) configured to perform communication with a second electronic device (130), memory (1504) configured to store at least one program, and at least one processor (1502) configured to execute at least one instruction of a program stored in the memory (1504). The at least one processor (1502) may be configured to obtain a request for a game control interface to support a touch interaction while a game is playing, mirror a game control interface screen (500) associated with the game control interface to the second electronic device (130) capable of touch input, in response to the use request, and apply a first input signal provided in response to a touch input to the second electronic device (130) to control the game.

According to an example embodiment, the at least one processor (1502) may be configured to obtain the request comprises outputting a game screen at the first electronic device (110), determining whether the game screen is the game control interface screen (500), transmit a mirroring request to the second electronic device (130) based on the game screen being the game control interface screen (500), and receive a response to the mirroring request from the second electronic device (130).

According to an example embodiment, the at least one processor (1502) may be configured to pause the game screen based on receiving the response to the mirroring request.

According to an example embodiment, the at least one processor (1502) may be configured to determine whether the game screen is the game control interface screen (500), based on determining whether the game screen includes items of a specific shape arranged to form a repeated pattern or whether the game screen includes an item requiring a input or selection.

According to an example embodiment, the at least one processor (1502) may be configured to transfer the first input signal to a game server (140), and output a game screen based on game information received from the game server (140) in response to the first input signal.

According to an example embodiment, the at least one processor (1502) may be configured to receive a mirroring end request from the second electronic device (130), and terminate mirroring of the game control interface screen (500) to the second electronic device (130) in response to receiving the mirroring end request.

According to an example embodiment, the at least one processor (1502) may be configured to convert the first input signal into a second input signal supported by an input device (120) incapable of touch input, and control the game based on the second input signal.

According to an example embodiment, the at least one processor (1502) may be configured to detect a repeated pattern formed by arrangement of items of a specific shape in a repeated structure on the game control interface screen (500), identify a type of a list formed by the detected repeated pattern, obtain a focused position in the identified type of the list, obtain a first focus position based on the first input signal in the identified type of the list, generate key input information based on information about a key controllable in the identified type of the list, the focused position, or the first focus position, and generate the second input signal based on the generated key input information.

According to an example embodiment, the at least one processor (1502) may be configured to compare a second focus position based on the generated key input information with the first focus position, based on the second focus position corresponding to the first focus position, generate the second input signal based on the generated key input information, and based on the second focus position not corresponding to the first focus position, repeat the conversion of the first input signal into the second input signal a preset number of times or transmit a message indicating that touch input processing is impossible, to the second electronic device (130).

According to an example embodiment, the at least one processor (1502) may be configured to receive a screenshot request signal from the second electronic device (130), obtain a screenshot image by capturing a game screen displayed on the first electronic device (110) based on the screenshot request signal, and transmit the obtained screenshot image to the second electronic device (130).

According to an example embodiment, the at least one processor (1502) may be configured to receive a continue game request signal from the second electronic device (130), transmit a platform switch request signal including information about the second electronic device (130) to middleware (160) connected with the first electronic device (110) and a game server (140) to switch a platform for playing the game from the first electronic device (110) to the second electronic device (130) based on the continue game request signal, and based on a response signal to the platform switch request signal being received from the middleware (160), terminate the connection with the middleware (160) and transmit connection information for connecting with an input device (120) incapable of touch input to the second electronic device (130).

According to an example embodiment, the at least one processor (1502) may be configured to mirror a game play screen associated with the game to the second electronic device (130), receive a second input signal from an input device (120) incapable of touch input, obtain a game play screen updated based on the second input signal, and mirror the updated game play screen to the second electronic device (130).

The technical objects of the disclosure are not limited to the foregoing, and other technical objects may be derived by one of ordinary skill in the art from example embodiments of the disclosure.

### [Advantageous Effects]

Effects of the present disclosure are not limited to the foregoing, and other unmentioned effects would be apparent to one of ordinary skill in the art from the following description. In other words, unintended effects in practicing embodiments of the disclosure may also be derived by one of ordinary skill in the art from example embodiments of the disclosure.

According to an embodiment of the disclosure, it is possible to allow a second electronic device to mirror a screen displayed on a first electronic device while a game is running in a game system.

According to an embodiment of the disclosure, the first electronic device and the second electronic device may display the same or different screens associated with the game.

According to an embodiment of the disclosure, the first electronic device may perform other functions while screen mirroring is performed by the second electronic device.

According to an embodiment of the disclosure, as the first electronic device displays a main play screen, and the second electronic device displays a game control interface screen, the user may control game through the second electronic device while viewing the main play screen on the first electronic device.

According to an embodiment of the disclosure, the user may play game using a first input device, such as a gamepad, and a second input device supporting touch interaction, such as the second electronic device.

According to an embodiment of the disclosure, in a cloud game environment, the first electronic device may change input information associated with game play into a type of information processable by the game server.

According to an embodiment of the disclosure, the user may play game through the first electronic device by referring to a screenshot image displayed on the second electronic device.

According to an embodiment of the disclosure, the user may seamlessly play the game which used to be played through the first electronic device, on the second electronic device.

### [Description of Drawings]

FIG. 1 is a block diagram illustrating an example configuration of a game system;
FIG. 2A is a signal flowchart illustrating an example operation in which a mobile terminal mirrors a game screen displayed on a TV while a cloud game is running in a game system;
FIG. 2B is a signal flowchart illustrating example operations of controlling a cloud game using a mobile terminal in a game system and terminating mirroring of the mobile terminal;
FIG. 3 is a view schematically illustrating an example operation in which a mobile terminal mirrors a game screen displayed on a TV while a cloud game is running a game system;
FIG. 4A is a signal flowchart illustrating an example operation in which a mobile terminal mirrors a game screen displayed on a TV while a game that lacks touch input support is running in a game system;
FIG. 4B is a signal flowchart illustrating an example operation of controlling game that lacks touch input support using a mobile terminal in a game system and terminating mirroring of the mobile terminal;
FIG. 5 is a view illustrating an example interface screen;
FIG. 6 is a flowchart illustrating an example operation in which a TV obtains a focused position by analyzing an interface screen in a game system;
FIG. 7 is a flowchart illustrating an example operation in which a TV converts a touch input signal into a key input signal in a game system;
FIG. 8 is a signal flowchart illustrating an example operation for displaying a screenshot of a game screen displayed on a TV on a mobile terminal in a game system;
FIG. 9 is a view schematically illustrating an example operation of displaying, on a mobile terminal, a screenshot of a game screen displayed on a TV in a game system ;
FIG. 10A is a signal flowchart illustrating an example operation of changing a platform for playing a cloud game from a TV to a mobile terminal in a game system;
FIG. 10B is a signal flowchart illustrating an example operation related to continuously playing a cloud game through a mobile terminal in a game system;
FIG. 11 is a view schematically illustrating an example operation of displaying, a cloud game being played on the TV, on a mobile terminal instead of on a TV in a game system;
FIG. 12 is a signal flowchart illustrating an example operation for allowing a game being played on a TV to be played on a mobile terminal as the mobile terminal performs mirroring in a game system;
FIG. 13 is a view schematically illustrating an example operation for allowing a game being played on a TV to be played on a mobile terminal as the mobile terminal performs mirroring in a game system;
FIG. 14 is a flowchart illustrating example operations of a first electronic device in a game system; and
FIG. 15 is a block diagram illustrating an example configuration of a first electronic device in a game system.

### [Mode for Invention]

Embodiments of the present disclosure are now described with reference to the accompanying drawings in such a detailed manner as to be easily practiced by one of ordinary skill in the art. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

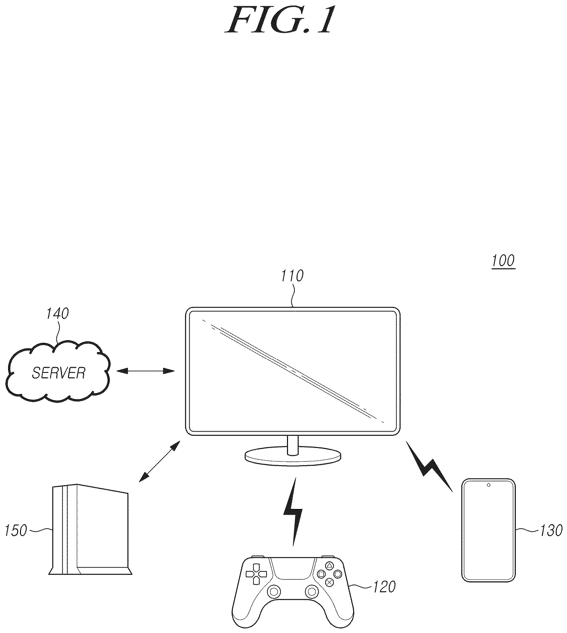

FIG. 1 is a block diagram illustrating an example configuration of a game system.

Referring to FIG. 1, a game system 100 may include a first electronic device 110, an input device 120, and a second electronic device 130. Optionally, the game system 100 may further include a server 140 and/or a game device 150.

The first electronic device 110 may be configured to allow a game to be played (e.g., executed) while displaying the game screen. The first electronic device 110 may be a device including a display and may be one of wearable devices such as a TV, a smartphone, a tablet, a PC, or a head mounted display (HMD).

The first electronic device 110 may access the server 140 through the network, based on the type of the game that may be executed in the first electronic device 110. The type of the game executable in the first electronic device 110 may include a first type that requires access to the server 140 and a second type that does not require access to the server 140.

The first type of game may include at least one of a cloud game, a cross-platform game, a web game, or an online-mode game (e.g., a console or PC game in which network or server connection is established). The second type of game may include a game executed on a separate game device 150 (e.g., a game console or local hardware such as a PC) or a game in an offline mode (e.g., a console or PC game in which network or server connection is not established).

The network for accessing the server 140 may be one of a wireless fidelity (Wi-Fi) network, a local area network, or a wide area network. The network may be implemented using any of various wired or wireless communication protocols such as ethernet, global system for mobile communications (GSM), enhanced data GSM environment, code division multiple access, time division multiplexing access, long term evolution (LTE), LTE advance (LTE-A), new radio (NR), or Bluetooth.

If the first type of game is executed, the first electronic device 110 may receive game data from the server 140. If the second type of game is executed, the first electronic device 110 may not access the server 140. If the second type of game is executed, the first electronic device 110 may receive game data from the game device 150 connected wiredly or wirelessly. Alternatively, the first electronic device 110 may use game data stored in the first electronic device 110. The game data may include a scene associated with the game or image data related to making up the game screen and may further include at least one of voice data or tactile data (e.g., vibration data).

The first electronic device 110 may be connected to the input device 120 based on wireless communication (e.g., Wi-Fi or Bluetooth communication). If the first electronic device 110 is connected to the input device 120, the first electronic device 110 may receive and process a signal from the input device 120. For example, the first electronic device 110 may receive a signal indicating game execution from the input device 120 and transmit the received signal to the game device 150 such as the game console or to the server 140. The first electronic device 110 may receive game data associated with game execution from the server 140 or the game device 150 in response to the transmitted signal. The first electronic device 110 may output the received game data to the display to allow the user to play or execute the game through the input device 120 while viewing the game screen. As another example, the first electronic device 110 may receive a signal instructing to execute the game application stored in the first electronic device 110 from the input device 120 and execute the game application in response to the received signal. After the game is executed, the first electronic device 110 may control the game based on the signal from the input device 120.

The input device 120 may include an input unit having a data transmission function and able to generate an input signal according to the user's control. The input unit may include at least one of a keypad (e.g., up/down/left/right direction keys or special keys), a joystick, a trackball, or a jog wheel. One or more input devices 120 may be provided and may be referred to as a game controller or a gamepad.

The input device 120 may transmit to the first electronic device 110 an input signal corresponding to the user's input , based on the user's input. The input device 120 may be used for various user selections associated with a game, such as selecting a game, configuring the game, selecting a game item, or selecting a game map.

The second electronic device 130 may be connected to the first electronic device 110 via a wireless communication (e.g., Wi-Fi or Bluetooth communication). For example, the second electronic device 130 may be a mobile terminal such as a smartphone, a tablet, or a wearable device. The second electronic device 130 may perform an operation of mirroring the screen of the first electronic device 110. The second electronic device 130 may support a touch input associated with the game. The screen mirroring operation and the touch input operation may be performed by the second electronic device 130 to be described below in detail.

The server 140 may be a server (e.g., a game server, a web server, a cloud server, or a cloud game server) that provides a game service to the first electronic device 110. In the cloud game environment, the server 140 may execute the game selected by the user and provide game data associated with the executed game to the first electronic device 110. The server 140 may render and compress a game screen corresponding to the user input in relation to the executed game and stream the game screen to the first electronic device 110.

The server 140 may register and manage user information for the game service separately for each user. The user information may include at least one of a user account, a password, or payment information for the serviced game.

The server 140 may store and manage game session information for each user account. The game session information for each user account may include, e.g., at least one of game point information, game item information, game level information, or game progress state information.

The server 140 may be operated as a single server or multiple servers. The server 140 may exist physically in the same server as a streaming server (not shown) or an authentication server (not shown) and may exist as a separate server and be connected through a mobile communication network.

The game device 150 may be a device that provides a game service such as a game console or a PC. The game device 150 may be connected to the first electronic device 110 via a wired connection (e.g., a connection via a cable, such as HDMI) or a wireless connection (e.g., a connection based on Wi-Fi or Bluetooth communication) to provide game data to the first electronic device 110. The game device 150 may process an input signal received from the input device 120 and provide game data, with the processed result reflected (or incorporated) therein, to the first electronic device 110.

Hereinafter, operations performed in the game system 100 as shown in FIG. 1 are described. Hereinafter, for better understanding, an example in which the first electronic device 110 is a TV, and the second electronic device 130 is a mobile terminal, such as a tablet or a smartphone are described. Also, for convenience of description, the input device 130 may be referred to as a 'gamepad,' and the server 140 may be referred to as a 'cloud game server.'

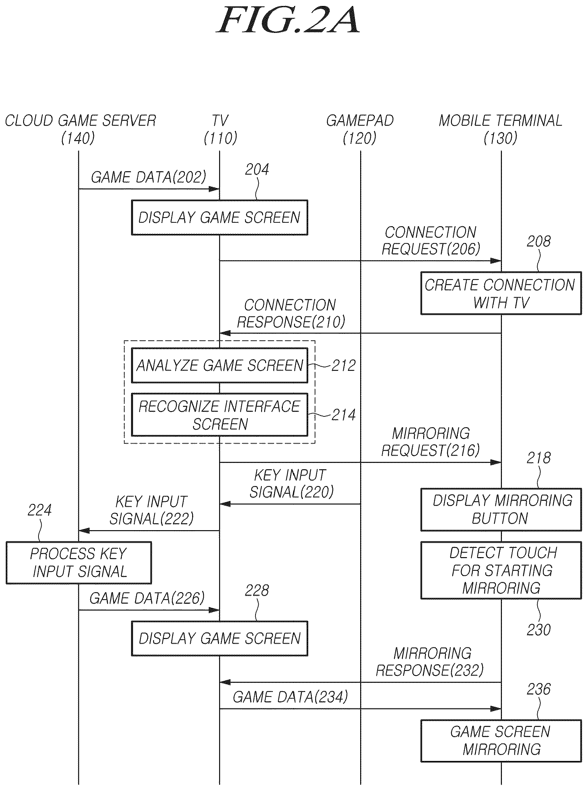

In the game system 100, the game screen displayed on the TV 110 may be mirrored to the mobile terminal 130, and a touch interaction related to the game being executed may be performed based on the game screen mirrored to the mobile terminal 130. Operations of the game system 100 related thereto are described with reference to FIGS. 2A to 4B.

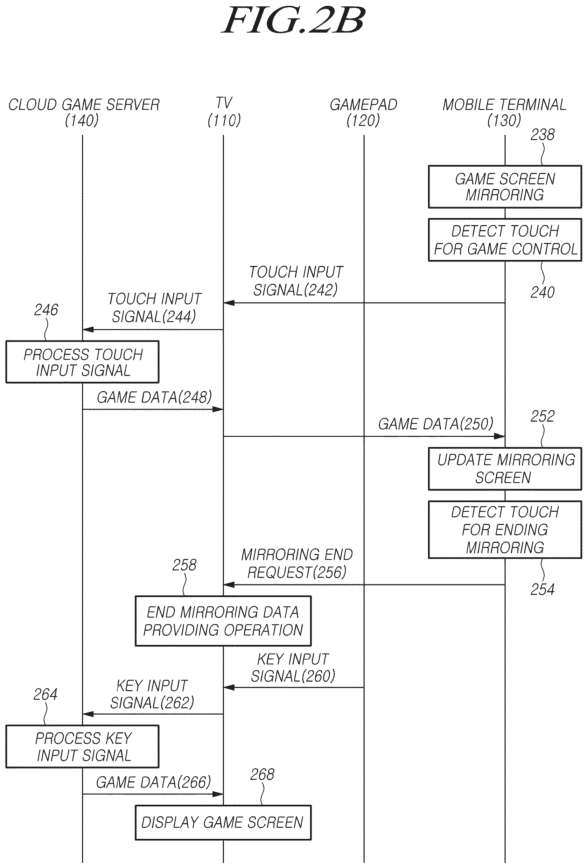

FIGS. 2A and 2B are signal flowcharts illustrating example operations of a game that supports a touch input in a game system. Supporting the touch input may mean that the game may be played using the touch input, and the cloud game server 140 may process an event corresponding to the touch input.

FIG. 2A is a signal flowchart illustrating an example operation in which a mobile terminal mirrors a game screen displayed on a TV while a cloud game is running in a game system,.

Referring to FIG. 2A, in operation 202, the TV 110 may receive game data from the cloud game server 140 while the game is executed. According to an example, the game data may include image data constituting a game screen to be displayed on the TV 110. According to an example, the game data may further include at least one of voice data or tactile data associated with the corresponding game screen. According to an example, the game data may be at least one of image data, voice data, or tactile data based on an input from the gamepad 120. The TV 110 may be connected to the gamepad 120 based on wireless communication (e.g., Wi-Fi or Bluetooth communication) and may receive an input signal from the gamepad 120 and transmit the input signal to the cloud game server 140 while the game is being executed. According to an example, the input signal from the gamepad 120 may be generated when at least one of various input units (e.g., a keypad, a joystick, a trackball, or a jog wheel) of the gamepad 120 is controlled by the user. For convenience of description, the input signal from the gamepad 120 may be referred to as a 'key input signal.'

In operation 204, the TV 110 may display a game screen on the display based on the received game data. According to an example, the TV 110 may output at least one of voice data or tactile data to at least one of an audio output unit, a speaker, a vibration module, or a haptic module while displaying the game screen, based on the received game data.

In operation 206, the TV 110 may transmit a connection request signal to the mobile terminal 130 based on the display of the game screen. According to an example, the mobile terminal 130 may be a device at a position capable of communicating with the TV 110 (e.g., wireless communication such as Wi-Fi or Bluetooth communication). According to an example, the mobile terminal 130 may be a device among one or more devices within a set distance from the TV 110.

In operation 208, the mobile terminal 130 may establish a connection with the TV 110. According to an example, the mobile terminal 130 may establish a communication link with the TV 110 as a part of connection establish operation. According to an example, if the mobile terminal 130 fails to establish connection with the TV 110, the mobile terminal 130 may end all operations.

In operation 210, if the mobile terminal 130 establishes connection with the TV 110, the mobile terminal 130 may transmit to the TV 110 a connection response signal indicating that the connection is established. According to an example, the connection response signal may be a response signal to the connection request signal of operation 206. According to an example, the mobile terminal 130 and the TV 110 may communicate based on the established connection.

In operation 212, the TV 110 may analyze the displayed game screen. According to an example, the TV 110 may analyze the game screen to recognize or identify the main play screen on which the game is played or the game control interface screen (hereinafter, referred to as an "interface screen") that requires the user input or selection in association with the game being played.

In operation 214, the TV 110 may recognize the interface screen based on the result of analyzing the game screen. According to an example, the TV 110 may determine whether the game screen is an interface screen, based on whether the game screen has items of a specific shape (e.g., circular or polygonal) arranged to form a repeated pattern. According to an example, the TV 110 may determine whether the game screen is an interface screen, based on whether the game screen includes an item that requires the user's input or selection. According to an example, before displaying the game screen, the TV 110 may determine whether the interface screen is to be displayed based on the key input signal received from the gamepad 120. For example, the TV 110 may determine whether the interface screen is to be displayed based on whether the key input signal received from the gamepad 120 indicates output of the interface screen. In this case, the operation of analyzing the game screen may not be performed.

According to an example, operations 212 and 214 may be optionally (e.g., may or may not be) performed.

In operation 216, the TV 110 may transmit a mirroring request signal to the mobile terminal 130. According to an example, if the interface screen is recognized based on the game screen analysis result, the TV 110 may transmit the mirroring request signal to the mobile terminal 130. Alternatively, if the interface screen is to be displayed based on the key input signal received from the gamepad 120, the TV 110 may transmit the mirroring request signal to the mobile terminal 130. Alternatively, if the connection response signal is received in operation 210, the TV 110 may transmit the mirroring request signal to the mobile terminal 130 without performing operations 212 and 214. According to an example, the mirroring request signal may include information for requesting the mobile terminal 130 to mirror and display the screen displayed on the TV 110. According to the example, the mirroring request signal may include information related to the game being executed on the TV 110 and/or information about the interface screen.

In operation 218, the mobile terminal 130 may display a mirroring button on the display of the mobile terminal 130, based on the mirroring request signal. According to an example, the mirroring button may be displayed in a form of being overlaid on (e.g., on top of) the screen displayed on the mobile terminal 130. According to an example, the mirroring button may be displayed as an opaque or translucent button having a predetermined shape (e.g., a circle or a polygon). According to an example, the mirroring button may be displayed at a predetermined position on the screen of the mobile terminal 130 or at a position designated by the user. According to an example, the display position of the mirroring button may be changed according to the user's selection. According to an example, the mirroring button may be displayed as an icon for the user's touch input. According to an example, the mirroring button may be implemented as one button or a plurality of buttons (e.g., a mirroring start button and a mirroring end button).

In operation 220, the TV 110 may receive a key input signal from the gamepad 120. According to an example, the key input signal may be a signal corresponding to the user input through the gamepad 120. According to an example, the key input signal may be a signal for game control.

In operation 222, the TV 110 may transmit the key input signal received from the gamepad 120 to the cloud game server 140.

In operation 224, the cloud game server 140 may process the key input signal received from the TV 110. According to an example, the cloud game server 140 may process an event corresponding to the key input signal. For example, the cloud game server 140 may process a control event (e.g., an operation control event such as forward, backward, or jump) or a selection event (e.g., a character, a game map, or a game item selection event) corresponding to the key input signal.

In operation 226, the cloud game server 140 may transmit to the TV 110 the game data, with the processed result of the key input signal reflected or incorporated therein.

In operation 228, the TV 110 may display the game screen based on the game data received from the cloud game server 140.

According to an example, FIG. 2A illustrates that operations 220 to 228 are performed after operation 216, but this is merely an example. In other words, operations 220 to 228 may be repeatedly performed at any time while the TV 110 and the gamepad 120 are connected and the game is being executed or played.

In operation 230, the mobile terminal 130 may detect a touch input to start the mirroring process on the display of the mobile terminal 130. According to an example, the mobile terminal 130 may detect a touch input instructing to start mirroring while the mirroring button is displayed. According to an example, if the mirroring button, implemented with one button, is touched a predetermined number of times (e.g., n times, where n is a natural number of 1 or more), the mobile terminal 130 may detect the predetermined number of touches as a touch input for starting mirroring. According to an example, if a designated button (e.g., a mirroring start button) for starting mirroring is touched among the plurality of mirroring buttons, the mobile terminal 130 may detect a touch on the set button as a touch input for starting mirroring.

In operation 232, the mobile terminal 130 may transmit a mirroring response signal to the TV 110 based on detection of a touch input for starting mirroring. According to an example, the mirroring response signal may be a response signal to the mirroring request signal of operation 216. According to an example, the mirroring response signal may include information indicating that the mobile terminal 130 has been instructed to mirror the game screen displayed on the TV 110. According to an example, the mirroring response signal may include information requesting to provide game data for mirroring.

In operation 234, the TV 110 may receive a mirroring response signal and may transmit game data to the mobile terminal 130 based on the received mirroring response signal. According to an example, the TV 110 may transmit the game data provided from the cloud game server 140 to the mobile terminal 130. According to an example, after transmitting the game data to the mobile terminal 130, the TV 110 may or may not continuously display the game screen. For example, the TV 110 may concurrently display a game screen with the mobile terminal 130 or stop displaying the game screen of the TV 110 so that the game screen is displayed only on the mobile terminal 130. According to an example, if the game screen display operation is stopped, the TV 110 may display a predetermined screen (e.g., a pause screen). The TV 110 may perform screen processing (e.g., dim processing to blur or dim the screen) on the predetermined screen so that the user may recognize (or be notified) that the game screen display operation is stopped.

In operation 236, the mobile terminal 130 may perform game screen mirroring. Game screen mirroring may indicate an operation in which game data is received from the TV 110 and the game screen is displayed on the mobile terminal 130. While the mobile terminal 130 performs game screen mirroring, operations as illustrated in FIG. 2B may be performed.

FIG. 2B is a signal flowchart illustrating example operations of controlling a cloud game using a mobile terminal in a game system and terminating mirroring of the mobile terminal.

Referring to FIG. 2B, in operation 238, the mobile terminal 130 may perform game screen mirroring. According to an example, operation 238 may correspond to operation 236 of FIG. 2A, and operations of FIG. 2B may be performed following operation 234 of FIG. 2A.

In operation 240, the mobile terminal 130 may detect a touch input for game control during mirroring. According to an example, if the area where the touch input occurs on the mirrored screen is an area including the interface screen, the mobile terminal 130 may detect the corresponding touch input as a touch input for game control.

In operation 242, the mobile terminal 130 may transmit a touch input signal including information about the detected touch input to the TV 110. According to an example, the touch input signal may include position information (e.g., coordinate information) on the screen on which the touch input is detected.

In operation 244, the TV 110 may receive a touch input signal from the mobile terminal 130 and transmit the received touch input signal to the cloud game server 140.

In operation 246, the cloud game server 140 may process the touch input signal. According to an example, the cloud game server 140 may process the touch input signal as well as the key input signal of the gamepad 120. For example, the cloud game server 140 may process a game action corresponding to the touch input signal or perform a selection operation (e.g., an operation of selecting a character, a game map, or a game item) corresponding to the touch input signal.

In operation 248, the cloud game server 140 may update the game data based on the touch input signal being processed and transmit the updated game data to the TV 110.

In operation 250, the TV 110 may receive the updated game data and transmit the received game data to the mobile terminal 130. According to an example, the TV 110 may or may not display a game screen based on the received game data.

In operation 252, the mobile terminal 130 may receive game data from the TV 110 to update and display the mirrored game screen.

In operation 254, the mobile terminal 130 may detect a touch input for ending mirroring. According to an example, if the area where the touch input occurs on the displayed screen is an area related to end mirroring, the mobile terminal 130 may detect the corresponding touch input as input for ending mirroring. According to an example, if the mirroring button implemented with one button is touched a predetermined number of times (e.g., n times) after mirroring starts, the mobile terminal 130 may detect the predetermined number of touches as input for ending mirroring. According to an example, if a button designated for ending mirroring is touched among the plurality of mirroring buttons, the mobile terminal 130 may detect a touch on the designated button as input for ending mirroring.

According to an example, the touch input to end mirroring may be detected at any point in time during the game screen mirroring. For example, the touch to terminate mirroring may be detected at a point in time different from (e.g., prior to) operation 254 (e.g., immediately after operation 238 or between the time when operation 240 and immediately before operation 254).

In operation 256, the mobile terminal 130 may transmit a mirroring end request signal to the TV 110 based on detection of a touch input to end mirroring. According to an example, the mirroring end request signal may include information indicating that the mobile terminal 130 will terminate the mirroring operation. Although not illustrated in FIG. 2B, the mobile terminal 130 may receive a mirroring end response signal corresponding to the mirroring end request signal from the TV 110. According to an example, the mobile terminal 130 may end the mirroring operation after transmitting the mirroring end request signal or after receiving the mirroring end response signal.

In operation 258, the TV 110 may end the mirroring data providing operation, based on receiving the mirroring end request signal from the mobile terminal 130. According to an example, the TV 110 may transmit a mirroring end response signal to the mobile terminal 130 and terminate the operation of providing game data for mirroring to the mobile terminal 130.

In operation 260, the TV 110 may receive a key input signal from the gamepad 120. According to an example, the key input signal may be a signal for game control.

In operation 262, the TV 110 may transmit the key input signal received from the gamepad 120 to the cloud game server 140.

In operation 264, the cloud game server 140 may process the key input signal received from the TV 110.

In operation 266, the cloud game server 140 may transmit to the TV 110 the game data, with the processed result of the key input signal reflected or incorporated therein.

In operation 268, the TV 110 may display the game screen based on the game data received from the cloud game server 140.

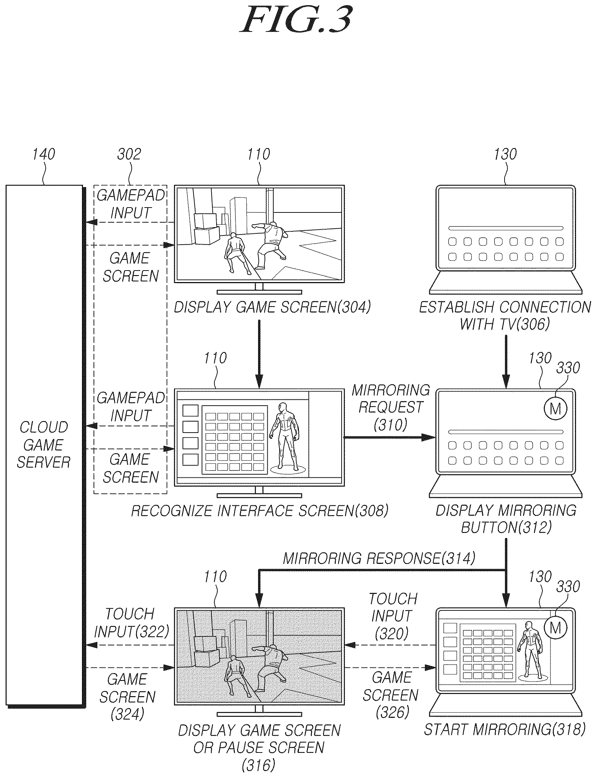

FIG. 3 is a view schematically illustrating an example operation in which a mobile terminal mirrors a game screen displayed on a TV while a cloud game is running a game system.

Referring to FIG. 3, in operation 302, the TV 110 may communicate with the gamepad 120 and the cloud game server 140 while the game is executed. For example, the TV 110 may receive a key input signal according to a gamepad input of the user from the gamepad 120 and transmit the received key input signal to the cloud game server 140. The TV 110 may receive the game data from the cloud game server 140 in response to the key input signal transmitted to the cloud game server 140. The game data may include image data constituting a game screen.

In operation 304, the TV 110 may display the game screen based on the received game data. According to an example, game control operations such as operations 302 and 304 may be repeatedly performed while the game is executed.

In operation 306, the mobile terminal 130 may establish a connection with the TV 110. For example, if the mobile terminal 130 is selected by the user at a position capable of communicating with the TV 110, the mobile terminal 130 may establish a connection with the TV 110. The mobile terminal 130 may complete connection establishment by establishing a communication link with the TV 110 or connecting to the TV 110.

In operation 308, the TV 110 may recognize the interface screen by analyzing the game screen. According to an example, operation 308 may not be performed.

In operation 310, the TV 110 may transmit a mirroring request signal to the mobile terminal 130. According to an example, the TV 110 may transmit the mirroring request signal to the mobile terminal 130 based on the recognition of the interface screen. Alternatively, if the connection with the mobile terminal 130 is completed, the TV 110 may transmit the mirroring request signal to the mobile terminal 130 without analyzing the game screen.

In operation 312, the mobile terminal 130 may display a mirroring button 330 based on the mirroring request signal. According to an example, the mobile terminal 130 may display the mirroring button 330 as a circular translucent icon. According to an example, the mobile terminal 130 may display the mirroring button 330 to be overlaid on the screen being displayed on the mobile terminal 130. However, this is merely an example, and the display method of the mirroring button 330 may be variously changed.

In operation 314, if a touch input to start mirroring operation is detected, the mobile terminal 130 may transmit a mirroring response signal to the TV 110. According to an example, if the mirroring button 330 is touched a predetermined number of times (e.g., n times), the mobile terminal 130 may detect and recognize that the predetermined number of touches indicate an instruction to start mirroring.

In operation 316, if a mirroring response signal is received, the TV 110 may perform an operation for mirroring on the mobile terminal 130. For example, the TV 110 may transmit the game data received from the cloud game server 140 to the mobile terminal 130 so that the game screen may be displayed on the mobile terminal 130. The TV 110 may continuously display or stop displaying the game screen. If the game screen display operation is stopped, the TV 110 may display a predetermined screen (e.g., a pause screen at the time of stopping the display operation or a pause screen of the main play screen). If the TV 110 displays the predetermined screen, the TV 110 may perform screen processing, such as dimming, on the predetermined screen.

In operation 318, the mobile terminal 130 may receive game data from the TV 110 and start mirroring the game screen. If mirroring starts, the mobile terminal 130 may be configured to detect a touch input for game control. According to an example, if the area where the touch input occurs on the mirrored screen is an area including the interface screen, the mobile terminal 130 may detect the corresponding touch input as a touch input for game control.

In operation 320, the mobile terminal 130 may transmit a touch input signal including information about the detected touch input (e.g., position information about the screen where the touch input is detected) to the TV 110.

In operation 322, the TV 110 may receive a touch input signal from the mobile terminal 130 and transmit the received touch input signal to the cloud game server 140.

In operation 324, the cloud game server 140 may process the touch input signal and transmit game data updated based on the processed touch input signal to the TV 110.

In operation 326, the TV 110 may receive the updated game data and transmit the received game data to the mobile terminal 130. According to an example, the TV 110 may or may not display a game screen based on the updated game data. The mobile terminal 130 may receive the updated game data from the TV 110 and update and display the mirrored game screen.

According to an example, mirroring performed by the mobile terminal 130 may be terminated when a touch input to end mirroring is detected by the mobile terminal 130. If the mirroring button 330 is touched a predetermined number of times (e.g., n times) after the mirroring starts, the mobile terminal 130 may detect and recognize that the certain number of touches indicate an instruction to end the mirroring.

According to an example, if the main play screen is displayed on the TV 110, the mirroring on the mobile terminal 130 may be ended without user intervention. For example, if the interface screen is not included in the game data received from the cloud game server 140, the TV 110 may not provide the corresponding game data to the mobile terminal 130, resulting in termination of the mirroring on the mobile terminal 130. Alternatively, if the mobile terminal 130 switches to the home screen due to the user's home button input, mirroring may be ended without the user's intervention.

If the mirroring of the mobile terminal 130 is terminated, the TV 110 may continuously display the game screen or provide the predetermined screen, such as a pause screen, and display the game screen again.

According to an example, the mobile terminal 130 may stop displaying the mirroring button 330 on the screen if the mirroring ends, the connection with the TV 110 ends, or input based on the user's selection.

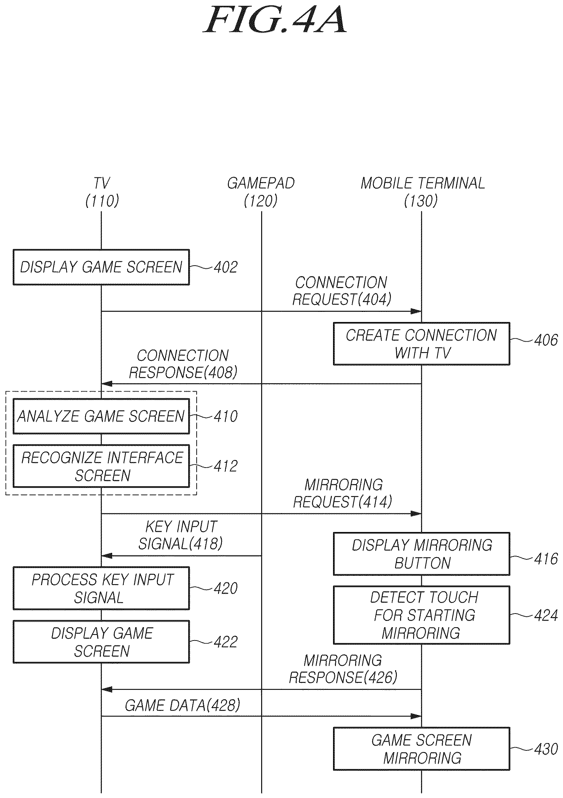

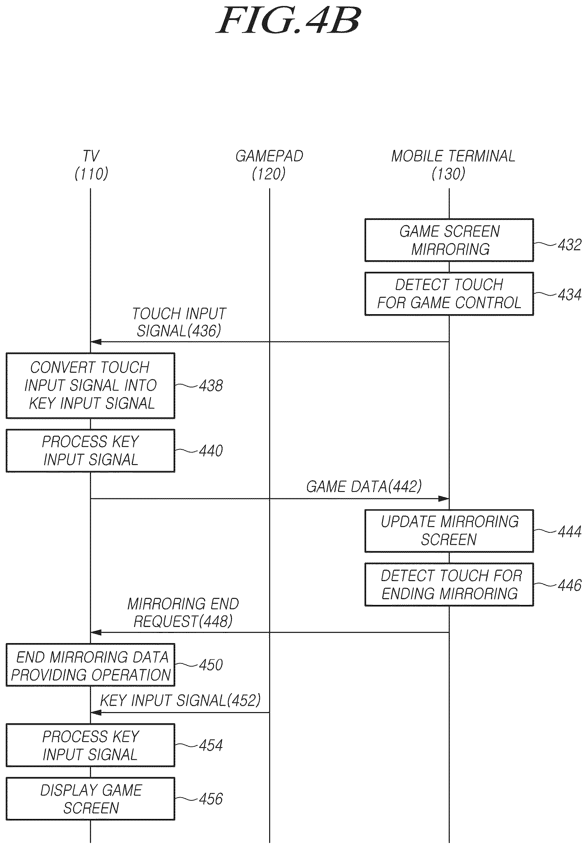

FIGS. 4A and 4B are signal flowcharts illustrating example operations in which a game that does not support a touch input is executed in a game system. A game that does not support a touch input is a game different from a cloud game and may be a game in which an event corresponding to a touch input may not be processed. The game that does not support the touch input may be a game that may be operated by the gamepad 120. For example, the game that does not support the touch input may be a console game, a web-based game that may be performed on a web browser, or a game of a game application downloaded to the TV 110.

Hereinafter, an example of a game, downloaded on the TV 110, that does not support a touch input is described. Operations of FIGS. 4A and 4B may be executed on the game console as well as applied to a console game, and a key input signal may be processed on the game console. Alternatively, the operations of FIGS. 4A and 4B may be executed on the web server as well as applied to a web-based game, and the key input signal may be processed on the web server.

FIG. 4A is a signal flowchart illustrating an example operation in which a mobile terminal mirrors a game screen displayed on a TV while a game that lacks touch input support is running in a game system.

Referring to FIG. 4A, in operation 402, the TV 110 may display a game screen. According to an example, the game screen may be displayed as the game application is executed on the TV 110.

In operation 404, the TV 110 may transmit a connection request signal to the mobile terminal 130 based on the display of the game screen. According to an example, the mobile terminal 130 may be a device at a position capable of communicating with the TV 110 (e.g., wireless communication such as Wi-Fi or Bluetooth communication). According to an example, the mobile terminal 130 may be a device selected by the user from among one or more devices within a predefined distance from the TV 110.

In operation 406, the mobile terminal 130 may establish a connection with the TV 110. According to an example, the mobile terminal 130 may establish a communication link with the TV 110 as a connection establish operation. According to an example, if the mobile terminal 130 fails to establish connection with the TV 110, the mobile terminal 130 may end all operations because communication with the TV 110 has failed.

In operation 408, if the mobile terminal 130 establishes connection with the TV 110, the mobile terminal 130 may transmit a connection response signal indicating that the connection is completed to the TV 110. According to an example, the connection response signal may be a response signal to the connection request signal of operation 404. According to an example, the mobile terminal 130 and the TV 110 may communicate based on the established connection.

In operation 410, the TV 110 may analyze the displayed game screen. According to an example, the TV 110 may analyze the game screen to recognize or identify the main play screen where the game is selected or the interface screen that requires the user's input or selection in association with the played game.

In operation 412, the TV 110 may recognize the interface screen based on the result of analyzing the game screen. According to an example, operations 410 and 412 may be optionally performed. In other words, operations 410 and 412 may or may not be performed.

In operation 414, the TV 110 may transmit a mirroring request signal to the mobile terminal 130. According to an example, if the interface screen is recognized in operation 412, the TV 110 may transmit a mirroring request signal to the mobile terminal 130. Alternatively, if the connection response signal is received in operation 408, the TV 110 may transmit the mirroring request signal to the mobile terminal 130 without performing operations 410 and 412. According to an example, the mirroring request signal may include information for requesting the mobile terminal 130 to mirror and display the game screen displayed on the TV 110. According to an example, the mirroring request signal may include information related to the game being executed on the TV 110.

In operation 416, the mobile terminal 130 may display a mirroring button on the display of the mobile terminal 130, based on the mirroring request signal. According to an example, the mirroring button may be displayed in a form of being overlaid on the screen displayed on the mobile terminal 130. According to an example, the mirroring button may be displayed as an opaque or translucent button having a predetermined shape (e.g., a circle or a polygon). According to an example, the mirroring button may be displayed at a predetermined position on the screen of the mobile terminal 130 or at a position designated by the user. According to an example, the display position of the mirroring button may be changed according to the user's selection. According to an example, the mirroring button may be displayed as an icon for the user's touch input. According to an example, the mirroring button may be implemented as one button or a plurality of buttons (e.g., a mirroring start button and a mirroring end button).

In operation 418, the TV 110 may receive a key input signal from the gamepad 120. According to an example, the key input signal may be a signal corresponding to the user input through the gamepad 120. According to an example, the key input signal may be a signal for game control.

In operation 420, the TV 110 may process the key input signal received from the gamepad 120. According to an example, the TV 110 may process an event corresponding to the key input signal. For example, the TV 110 may process a control event (e.g., an operation control event such as forward, backward, or jump) or a selection event (e.g., a character, a game map, or a game item selection event) corresponding to the key input signal.

In operation 422, the TV 110 may display a game screen based on the game data to which the processed result of the key input signal has been reflected or incorporated therein.

According to an example, operations 418 to 422 may be repeatedly performed while the TV 110 and the gamepad 120 are connected to each other.

According to an example, FIG. 4A illustrates that operations 418 to 422 are performed after operation 416, but this is merely an example. In other words, operations 418 to 422 may be repeatedly performed at any point in time while the TV 110 and the gamepad 120 are connected and the game is executed.

In operation 424, the mobile terminal 130 may detect a touch input for starting mirroring on the display of the mobile terminal 130. According to an example, the mobile terminal 130 may detect a touch input to commence mirroring operation while the mirroring button is displayed. According to an example, if the mirroring button implemented with one button is touched a predetermined number of times (e.g., n times), the mobile terminal 130 may detect and recognize that the predetermined number of touches indicate an instruction to start the mirroring process. According to an example, if a button (e.g., a mirroring start button) predetermined for starting mirroring is touched among the plurality of mirroring buttons, the mobile terminal 130 may detect and recognize that the touch on the predetermined button as an instruction to start mirroring.

In operation 426, the mobile terminal 130 may transmit a mirroring response signal to the TV 110 based on detection of a touch input for starting mirroring. According to an example, the mirroring response signal may be a response signal to the mirroring request signal of operation 414. According to an example, the mirroring response signal may include information indicating that the mobile terminal 130 has been instructed to mirror the game screen displayed on the TV 110. According to an example, the mirroring response signal may include information requesting to provide game data for mirroring.

In operation 428, the TV 110 may receive a mirroring response signal and transmit game data to the mobile terminal 130 based on the received mirroring response signal. According to an example, after transmitting the game data to the mobile terminal 130, the TV 110 may or may not continuously display the game screen. For example, the TV 110 and the mobile terminal 130 may concurrently display a game screen or stop displaying the game screen on the TV 110 so that the game screen is displayed only on the mobile terminal 130. According to an example, if the game screen display operation is stopped, the TV 110 may display a predetermined screen (e.g., a pause screen of the main play screen). The TV 110 may perform screen processing (e.g., dimming) on the predetermined screen so that the user may recognize that the game screen display operation is stopped.

In operation 430, the mobile terminal 130 may perform game screen mirroring. Game screen mirroring may indicate an operation in which the mobile terminal 130 receives game data from the TV 110 and displays a game screen. While the mobile terminal 130 performs game screen mirroring, operations as illustrated in FIG. 4B may be performed.

FIG. 4B is a signal flowchart illustrating an example operation of controlling a console game using a mobile terminal and ending mirroring of the mobile terminal in a game system.

Referring to FIG. 4B, in operation 432, the mobile terminal 130 may perform game screen mirroring. According to an example, operation 432 may correspond to operation 430 of FIG. 4A, and operations of FIG. 4B may be performed following operation 428 of FIG. 4A.

In operation 434, the mobile terminal 130 may detect a touch input for game control during mirroring. According to an example, if the area where the touch input occurs on the mirrored screen is an area including the interface screen, the mobile terminal 130 may detect the corresponding touch input as a touch input for game control.

In operation 436, the mobile terminal 130 may transmit a touch input signal including information about the detected touch input to the TV 110. According to an example, the touch input signal may include position information (e.g., coordinate information) on the screen on which the touch input is detected.

In operation 438, the TV 110 may receive a touch input signal from the mobile terminal 130 and may convert the received touch input signal into a key input signal.

In operation 440, the TV 110 may process the converted key input signal. For example, the TV 110 may process a game action corresponding to the key input signal or perform a selection operation corresponding to the key input signal.

In operation 442, the TV 110 may update the game data based on the key input signal being processed and transmit the updated game data to the mobile terminal 130. According to an example, the TV 110 may or may not display a game screen based on the received game data.

In operation 444, the mobile terminal 130 may receive game data from the TV 110 to update and display the mirrored game screen.

In operation 446, the mobile terminal 130 may detect a touch input for terminating mirroring. According to an example, if the area where the touch input occurs on the displayed screen is an area related to end mirroring, the mobile terminal 130 may detect the corresponding touch input as a touch input for ending the mirroring process. According to an example, if the mirroring button implemented with one button is touched a predetermined number of times (e.g., n times) after mirroring starts, the mobile terminal 130 may detect and recognize that the predetermined number of touches indicate an instruction to end mirroring. According to an example, if a button predetermined for ending mirroring is touched among the plurality of mirroring buttons, the mobile terminal 130 may detect a touch on the predetermined button as an input for ending mirroring.

According to an example, the touch input for ending mirroring may be detected at any time after the game screen mirroring commences. For example, the touch for ending mirroring may be detected at any point in time different (e.g., prior to) from operation 446 (e.g., immediately after operation 432, or between operation 434 and operation 446).

In operation 448, the mobile terminal 130 may transmit a mirroring end request signal to the TV 110 based on detection of a touch input for ending mirroring. According to an example, the mirroring end request signal may include information indicating that the mobile terminal 130 will end the mirroring operation. Although not illustrated in FIG. 4B, the mobile terminal 130 may receive a mirroring end response signal corresponding to the mirroring end request signal from the TV 110. According to an example, the mobile terminal 130 may end the mirroring operation after transmitting the mirroring end request signal or after receiving the mirroring end response signal.

In operation 450, the TV 110 may end the mirroring data providing operation, based on receiving the mirroring end request signal from the mobile terminal 130. According to an example, the TV 110 may transmit a mirroring end response signal to the mobile terminal 130 and end the operation of providing game data for mirroring to the mobile terminal 130.

In operation 452, the TV 110 may receive a key input signal from the gamepad 120. According to an example, the key input signal may be a signal for game control.

In operation 454, the TV 110 may process the key input signal received from the gamepad 120.

In operation 456, the TV 110 may display a game screen based on game data to which a processed key input signal has been reflected or incorporated.

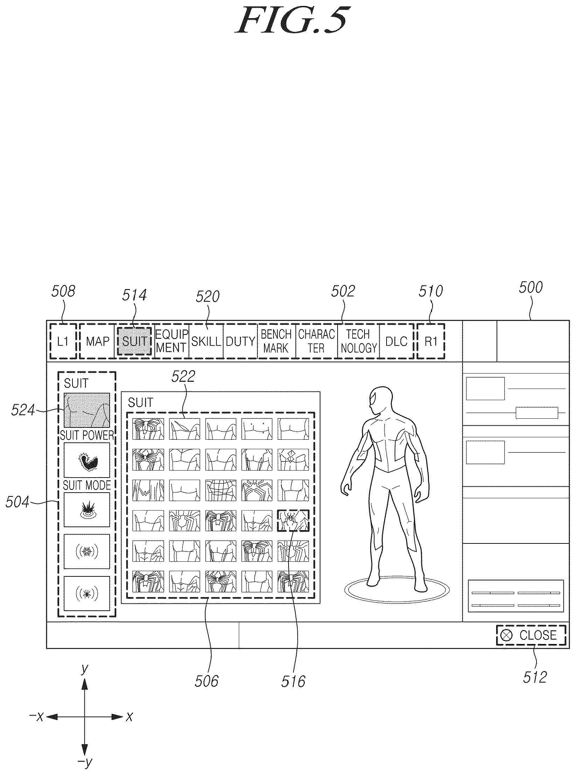

FIG. 5 is a view illustrating an example interface screen.

Referring to FIG. 5, the interface screen 500 may include one or more user interface areas for game control. For example, the one or more user interface areas may include a first interface area 502, a second interface area 504, and a third interface area 506.

According to an example, the first interface area 502 may include a first linear list forming one row. According to an example, the second interface area 504 may include a second linear list forming one column. According to an example, the third interface area 506 may include a checkerboard type list forming a two-dimensional arrangement by two or more rows and two or more columns. Elements included in the first linear list, the second linear list, or the checkerboard type list may be items (or options or menu items) that may be selected by the user. Items included in the same interface area may have the same or similar shape and/or the same or similar color, and identification information (e.g., image and/or text) for identifying each item may be displayed for each item.

Items included in the first linear list, the second linear list, or the checkerboard type list may be arranged to form a repeated pattern. The repeated pattern may mean that a specific shape or structure appears repeatedly. For example, in the first interface area 502, rectangular items having a first size and color may be arranged to have a pattern of being repeated N times (e.g., 9 times) in the x-axis or -x-axis direction. In the second interface area 504, rectangular items having a second size may be arranged to have a pattern of being repeated M times (e.g., 5 times) in the y-axis or -y-axis direction. In the third interface area 506, the rectangular items having a third size may be arranged to have a pattern of being repeated P times (e.g., 5 times) in the x-axis or -x-axis direction and repeated Q times (e.g., 6 times) in the y-axis or -y-axis direction. Here, N, M, P, and Q may be natural numbers meeting N ≥ 1, M ≥ 1, P ≥ 2, and Q ≥ 2, respectively.

The one or more user interface areas are not limited to the form of the first linear list, the second linear list, or the checkerboard type list, but may be configured in various list forms having a polygonal structure other than the circular shape, the square shape, or a 3D structure. Even if one or more user interface areas are configured in various list forms, items forming the repeated pattern may be included in one or more user interface areas.

According to an example, the interface screen 500 may include a key label. The key label may be graphic information and/or text information for indicating which key of the gamepad 120 performs a function associated with the corresponding key label. For example, key labels of L1 508 and R1 510 may be displayed on the left and right sides, respectively, of the first interface 502. Each of the L1 508 and the R1 510 may indicate a key (e.g., a left direction key or a right direction key) of the gamepad 120 that may be used to select one of items included in the first interface area 502. As another example, a key label of Ⓧ CLOSE 512 may be displayed at the lower right of the interface screen 500. The Ⓧ CLOSE 512 may indicate an x key of the gamepad 120 that may be used to end the interface screen 500.

The item selected by the user among items included in at least one of the first interface area 502, the second interface area 504, or the third interface area 506 may be focused to be visually highlighted. According to an example, the selected item may be focused to have a different color or shade from the other items, may be focused to graphically highlight an edge of the selected item or may be focused by an indicator (e.g., a finger pointing or an arrow) indicating the selected item.

For example, if the user selects a first item 514 among the nine items of the first interface area 502, the first item 514 may be focused to have a different color or shade from the other items. Alternatively, if the user selects a second item 516 from among the 30 items of the third interface 506, the second item 516 may be focused in a form in which an edge surrounding the whole or part of the second item 516 is displayed.

According to an example, the first interface area 502, the second interface area 504, or the third interface area 506 may include items associated with or not associated with each other. According to an example, the first interface area 502, the second interface area 504, or the third interface area 506 may include items associated with each other having upper and lower levels. For example, at least one (e.g., the first item 514) of the nine items of the first interface area 502 may include one or more items (e.g., five items) of the second interface area 504 as sub-items. At least one (e.g., the suit 524) of the one or more items of the second interface area 504 may include one or more items (e.g., 30 items) of the third interface area 506 as sub-items.

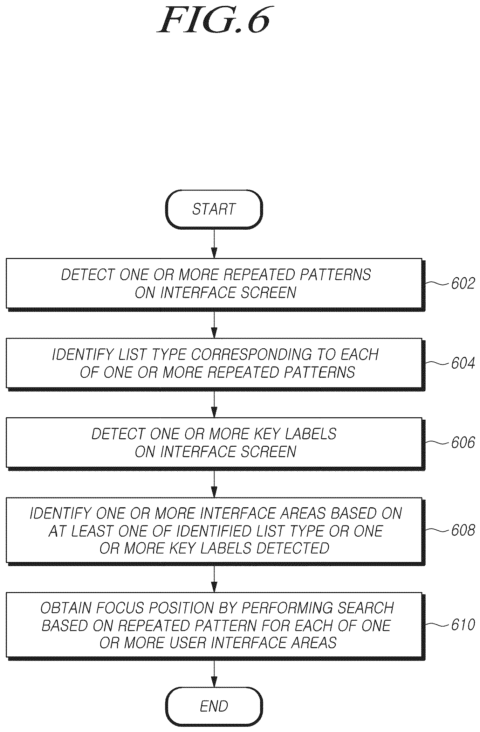

According to an example, the TV 110 may analyze the interface screen 500 as shown in FIG. 5 to identify which item is being focused. The operation of the TV 110 related thereto is described with reference to FIG. 6.

FIG. 6 is a flowchart illustrating an example operation in which a TV obtains a focused position by analyzing an interface screen in a game system.

Referring to FIG. 6, in operation 602, if an interface screen (e.g., the interface screen 500 of FIG. 5) is displayed, the TV 110 may detect one or more repeated patterns on the interface screen.

In operation 604, the TV 110 may identify a list type (e.g., a first linear list, a second linear list, or a checkerboard type list) corresponding to each of one or more repeated patterns.

In operation 606, the TV 110 may detect one or more key labels (e.g., the L1 508, the R1 510, or the Ⓧ CLOSE 512 of FIG. 5) on the interface screen.

According to an example, operation 602, operation 604, or operation 606 may be performed using artificial intelligence (AI) (e.g., iterative pattern recognition AI, list type identification AI, or key label detection AI) based on machine learning or deep learning. For example, the TV 110 may perform operation 602, operation 604, or operation 606 by pre-learning set information (e.g., one or more repeated patterns, one or more list types, or one or more key labels) and predicting, identifying, or determining the repeated pattern, the list type, or the key label based on the pre-learned result.

In operation 608, the TV 110 may identify one or more user interface areas (e.g., the first interface area 502, the second interface area 504, or the third interface area 506 of FIG. 5) based on at least one of the list-type identified corresponding to each of the one or more repeated patterns or the detected one or more key labels.

According to an example, if the list corresponding to the specific repeated pattern is a first linear list forming one row, the TV 110 may identify an area including the first linear list on the interface screen as the user interface area (e.g., the first interface area 502 of FIG. 5) controlled with left/right direction keys.

According to an example, if the list corresponding to the specific repeated pattern is a second linear list forming one column, the TV 110 may identify an area including the second linear list on the interface screen as the user interface area (e.g., the second interface area 504 of FIG. 5) controlled with up/down direction keys.

According to an example, if the list corresponding to the specific repeated pattern is a checkerboard type list, the TV 110 may identify an area including the checkerboard type list on the interface screen as the user interface area (e.g., the third interface area 506 of FIG. 5) operated with up/down/left/right direction keys.

According to the example, if one or more key labels are present at the position (or the adjacent position) associated with the list corresponding to the specific repeated pattern, the TV 110 may identify the area including the corresponding list as the area controlled by the key indicated by one or more key labels. For example, if key labels of L1 508 and R1 510 are displayed on the left and right sides of the first linear list on the interface screen 500 as shown in FIG. 5, the area including the first linear list may be identified as the user interface area (e.g., the first interface area 502 of FIG. 5) operated with the L1 key or the R1 key.

In operation 610, the TV 110 may obtain a focus position by performing a search based on a repeated pattern for each of one or more user interface areas. For example, the focus position may indicate the position of the focused item on the user interface area.

According to an example, the TV 110 may obtain the focus position (e.g., the position corresponding to the first item 514) by searching the x-axis or -x-axis direction in consideration of the repeated pattern (e.g., the pattern in which the rectangular item having the first size and color is repeated N times in the x-axis or -x-axis direction) of the first interface area 502 of FIG. 5.

According to an example, the TV 110 may obtain the focus position (e.g., the position corresponding to the second item 516) by searching the x-axis and y-axis directions or the -x-axis and -y-axis directions in consideration of the repeated pattern (e.g., the pattern in which the rectangular item having the third size is repeated P times in the x-axis or -x-axis direction and repeated Q times in the y-axis or -y-axis direction) of the third interface area 506 of FIG. 5.

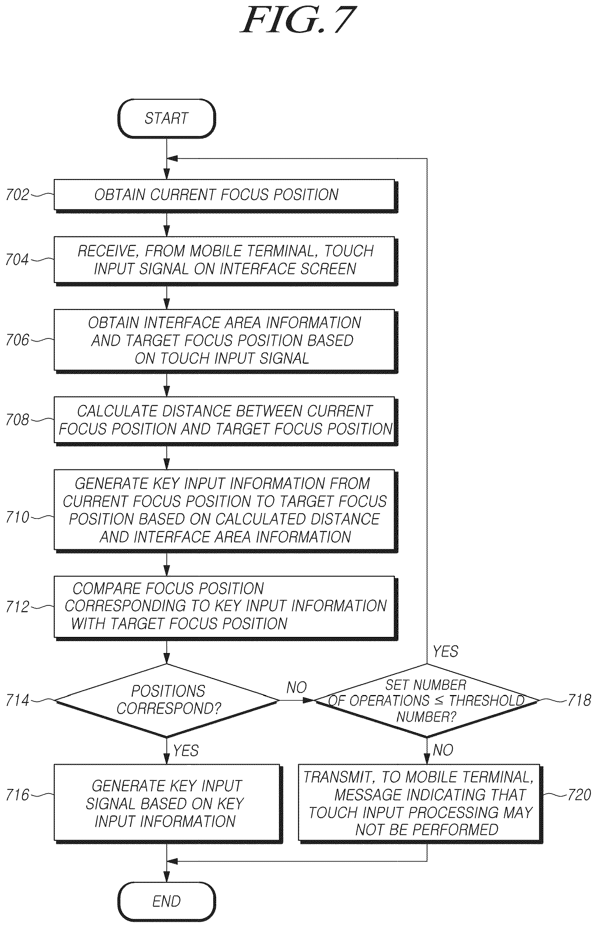

According to an example, if the focus position is obtained, the TV 110 may perform an operation of converting the touch input signal into a key input signal. The operation of the TV 110 related thereto is described with reference to FIG. 7. For convenience of description, the focus position obtained through the operations of FIG. 6 will be referred to as a current focus position.

FIG. 7 is a flowchart illustrating an example operation in which a TV converts a touch input signal into a key input signal in a game system.

Referring to FIG. 7, in operation 702, the TV 110 may obtain a current focus position based on the operations of FIG. 6.

In operation 704, the TV 110 may receive a touch input signal for an item (e.g., the first item 514 or the second item 516 of FIG. 5) selected by the user on the interface screen (e.g., the interface screen 500 of FIG. 5) from the mobile terminal 130.

In operation 706, the TV 110 may obtain a target focus position based on the touch input signal. According to an example, the TV 110 may obtain the target focus position and the interface area information based on the position information included in the touch input signal, i.e., the position information (e.g., coordinate information) on the interface screen on which the touch input is detected. According to the example, the interface area information may include information about the user interface area including the item corresponding to the target focus position. For example, the user interface area may be one of the user interface area (e.g., the first interface area 502 of FIG. 5) operated with left/right direction keys, the user interface area (e.g., the second interface area 504 of FIG. 5) operated with up/down direction keys, or the user interface area (e.g., the third interface area 506 of FIG. 5) operated with up/down/left/right direction keys.

In operation 708, the TV 110 may calculate a distance between the current focus position and the target focus position. According to an example, the distance may be calculated in units of items or repeated patterns in the user interface area and may be calculated in consideration of direction information (e.g., x, -x, y, -y axis directions or up, down, left, and right directions) with respect to the current focus position.

In operation 710, the TV 110 may generate key input information from the current focus position to the target focus position, based on the calculated distance between the current focus position and the target focus position and the interface area information.

According to an example, in the first interface area 502 of FIG. 5, if the current focus position is a position corresponding to the first item 514, the target focus position is a position corresponding to the third item 520, the calculated distance between the current focus position and the target focus position is a distance of 2 in the X-axis direction (or the right direction) with respect to the current focus position, and the interface area information includes information about the user interface area controlled with the left/right direction keys, the TV 110 may generate key input information (e.g., twice on the right direction key) indicating that the right direction key corresponding to the X-axis direction should be controlled by 2 which corresponds to the calculated distance.

According to an example, in the third interface area 506 of FIG. 5, if the current focus position of the TV 110 is a position corresponding to the second item 516, the target focus position is a position corresponding to the fourth item 522, the calculated distance between the current focus position and the target focus position is a distance of 3 in the y-axis direction (or the upper direction) and 4 in the -x-axis direction (or the left direction) with respect to the current focus position, and the interface area information includes information about the user interface area controlled with the up, down, left, and right direction keys, the TV 110 may generate key input information (e.g., three times on the upper direction key and three times on the left direction key) indicating that the upper direction key corresponding to the y-axis direction should be controlled by 3 which corresponds to the calculated distance, and the left direction key corresponding to the -x-axis direction should be controlled by 3 which corresponds to the calculated distance.

According to the example, if key input information (e.g., the up direction key or the down direction key) that does not correspond to interface area information (e.g., information about the user interface area controlled by the left/right direction keys) is generated, the TV 110 may detect that an error has occurred and may perform (or repeat) operation 702 or its subsequent operations.

In operation 712, the TV 110 may compare the focus position corresponding to the key input information with the target focus position.

If the key combination focus position corresponding to the key input information corresponds to the target focus position in operation 714, the TV 110 may generate the key input signal based on the key input information in operation 716.

If the focus position corresponding to the key input information does not correspond to the target focus position in operation 714, the TV 110 may determine whether the predetermined number of operations is less than or equal to a threshold number in operation 718. According to an example, the predetermined number of operations may indicate the number of operations 702 to 714 performed. If the predetermined number of operations is less than or equal to the threshold number, the TV 110 may perform operations 702 to 714 again. If the predetermined number of operations exceeds the threshold number, the TV 110 may perform operation 720.

In operation 720, if the predetermined number of operations exceeds the threshold number, the TV 110 may transmit a message indicating that touch input processing may not be performed to the mobile terminal 130. According to an example, the mobile terminal 130 may receive a message from the TV 110 and display a notification message on the display of the mobile terminal 130. For example, the notification message may be a message to be provided to the user, such as "The position may not be operated by a touch input" or "The game control may not be performed by a touch input." Based on the above message, the user may perform a touch input at another position of the interface screen or may end mirroring of the mobile terminal 130 and then execute a game using the TV 110 and the gamepad 120.

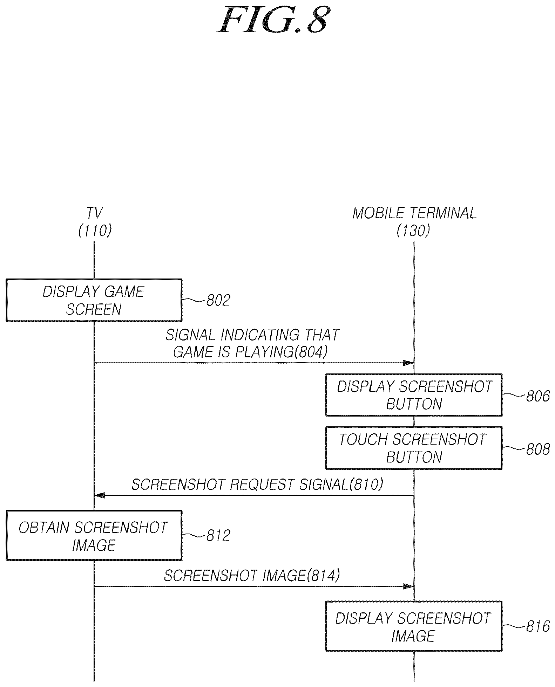

FIG. 8 is a signal flowchart illustrating an example operation for displaying a screenshot of a game screen displayed on a TV on a mobile terminal in a game system.

Referring to FIG. 8, in operation 802, the TV 110 may display a game screen when a game (e.g., a cloud game, a console game, a web-based game, or a game of a game application downloaded to the TV) is executed. Although not illustrated in FIG. 8, the TV 110 may be connected to the gamepad 120 while the game is executed and may transmit a key input signal from the gamepad 120 to the cloud game server 140, the web server, or the game console 150. The TV 110 may receive game data reflecting an operation of processing a key input signal from the cloud game server 140, the web server, or the game console 150.

**In** operation 804, the TV 110 may transmit to the mobile terminal 130 a signal indicating that the game in progress (or being played). According to an example, if the game starts in the state of being connected to the mobile terminal 130, the TV 110 may transmit to the mobile terminal 130 a signal indicating that the game is being played. According to an example, if the connection with the mobile terminal 130 is completed while the game is executed, the TV 110 may transmit to the mobile terminal 130 a signal indicating that the game is being played.

The mobile terminal 130 may receive a signal indicating that the mobile terminal 130 is playing the game and display a screenshot button based on the received signal in operation 806. According to an example, the screenshot button may be displayed to select whether to display the screenshot image of the game screen displayed on the TV 110 on the mobile terminal 130. According to an example, the screenshot button may be displayed in a form of being overlaid on the screen being displayed on the mobile terminal 130. According to an example, the screenshot button may be displayed as an opaque or translucent button having a set shape (e.g., a circle or a polygon). According to an example, the screenshot button may be displayed at a set position on the screen of the mobile terminal 130 or at a position designated by the user. According to an example, the display position of the screenshot button may be changed according to the user's selection. According to an example, the screenshot button may be displayed as an icon for the user's touch input.

In operation 808, if the screenshot button is touched by the user, the mobile terminal 130 may detect a touch input.

In operation 810, the mobile terminal 130 may transmit a screenshot request signal to the TV 110 based on the detected touch input.

In operation 812, the TV 110 may obtain a screenshot image by capturing a displayed game screen, based on the screenshot request signal.

In operation 814, the TV 110 may transmit the obtained screenshot image to the mobile terminal 130.

In operation 816, the mobile terminal 130 may receive the screenshot image from the TV 110 and display the received screenshot image on the display of the mobile terminal 130. According to an example, the mobile terminal 130 may store the screenshot image received from the TV 110. According to an example, there may be a plurality of screenshot images stored in the mobile terminal 130. According to an example, the mobile terminal 130 may display a search screen that allows the user to search for a plurality of screenshot images. For example, the search screen may be a screen for allowing the user to select at least one of a plurality of screenshot images through a touch swipe such as left and right scrolls or up and down scrolls.

According to an example, the TV 110 may display a game screen even after obtaining a screenshot image or transmitting the screenshot image. The TV 110 may continuously display the game screen regardless of the screenshot-related operation, and the mobile terminal 130 may display the screenshot image related to the game. Based on this, the user may play the game while viewing the game screen displayed on the TV 110 with reference to the screenshot image (e.g., the game map) displayed on the mobile terminal 130.

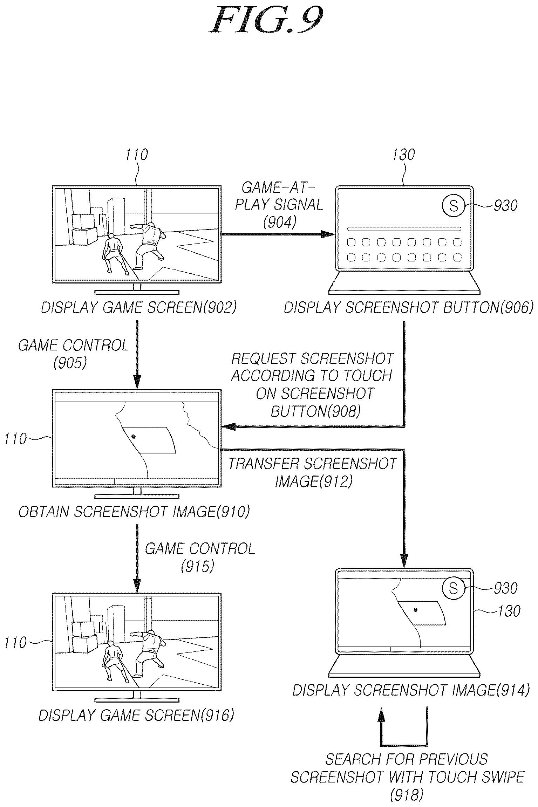

FIG. 9 is a view schematically illustrating an example operation of displaying, on a mobile terminal, a screenshot of a game screen displayed on a TV in a game system.

Referring to FIG. 9, in operation 902, the TV 110 may display a game screen while the game is executed. Game data for displaying the game screen may be stored in the TV 110 or provided from the cloud game server 140, the web server, or the game console 150.

In operation 904, the TV 110 may transmit a signal indicating that the game is being played on the TV 110 to the mobile terminal 130.

In operation 906, the mobile terminal 130 may receive a signal indicating that game is being played on the mobile terminal 130 and display a screenshot button 930. According to an example, the mobile terminal 130 may display the screenshot button 930 as a circular translucent icon. The mobile terminal 130 may display the screenshot button 930 to be overlaid on the screen displayed on the mobile terminal 130. However, this is merely an example, and the display method of the screenshot button 930 may be variously changed.

In operation 908, if a touch input is detected from the screenshot button 930, the mobile terminal 130 may transmit a screenshot request signal to the TV 110.

In operation 910, the TV 110 may obtain a screenshot image by capturing a displayed game screen, based on the screenshot request signal.

In operation 912, the TV 110 may transmit the obtained screenshot image to the mobile terminal 130.

In operation 914, the mobile terminal 130 may receive the screenshot image from the TV 110 and display the received screenshot image. According to an example, the mobile terminal 130 may continuously display the screenshot button 930 on the screen of the mobile terminal 130 while being connected to the TV 110. According to an example, even when the mobile terminal 130 is connected to the TV 110, the mobile terminal 130 may not display the screenshot button 930 on the screen of the mobile terminal 130 based on the user choosing not to have the button displayed. According to an example, if the mobile terminal 130 is disconnected from the TV 110, the mobile terminal 130 may not display the screenshot button 930 on the screen of the mobile terminal 130.

In operation 916, the TV 110 may display a game screen. According to an example, the game may be played without interruption even during the operation of the TV 110 receiving and transmitting the screenshot image. For example, controlling by using the gamepad 120 (e.g., game control 905 and 915) and displaying on the TV 110 the game screen having been updated based on the corresponding control (e.g., the game screen display operations 902 and 916) may be repeatedly performed.

Based on operations 914 and 916, the user may play the game while viewing the game screen displayed on the TV 110 with reference to the screenshot image displayed on the mobile terminal 130.

In operation 918, the mobile terminal 130 may search for not only the screenshot image received in operation 912 but also the screenshot image previously received from the TV 110. For example, the mobile terminal 130 may display a screenshot image search screen so that the user may search for or select at least one of the screenshot images received from the TV 110 by using a touch swipe.

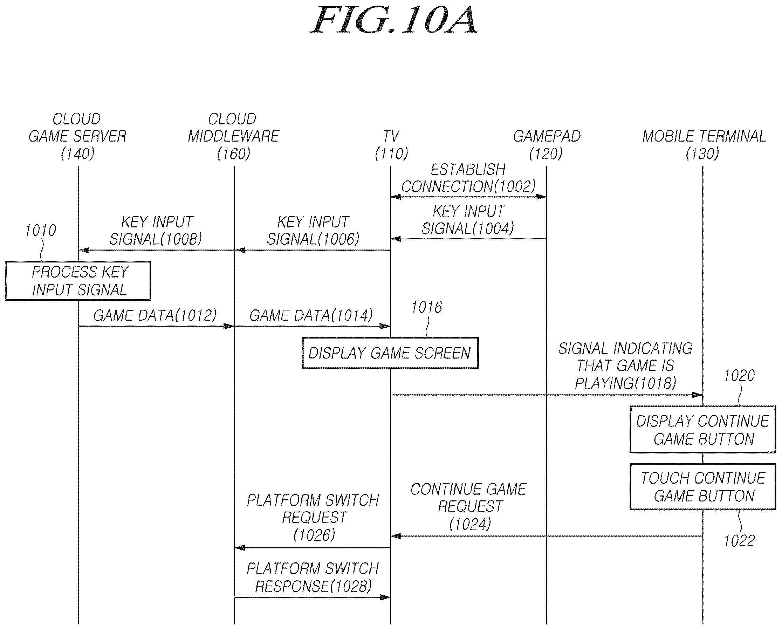

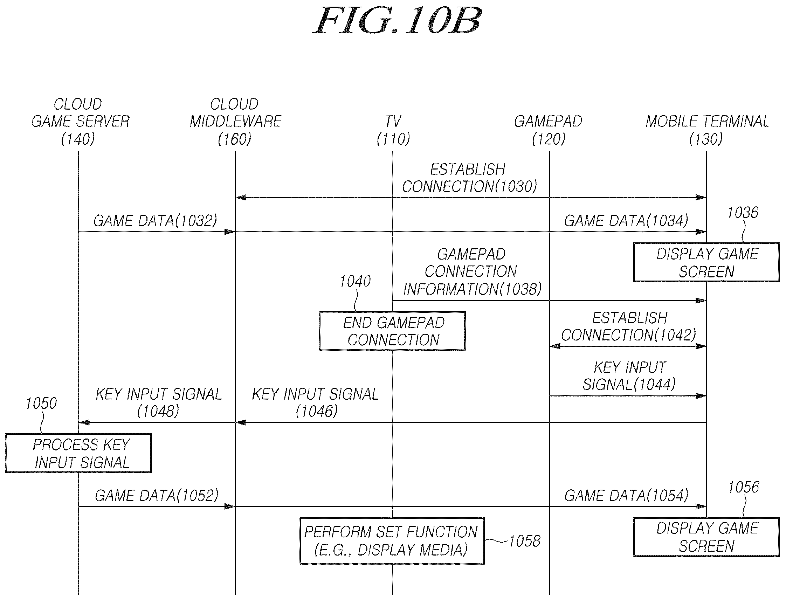

FIGS. 10A and 10B are signal flowcharts illustrating example operations for displaying a cloud game, executed on the TV 110, on the mobile terminal 130 in the game system 100. According to an example, based on the operations of FIGS. 10A and 10B, the user may play a game on the TV 110 and continue to play the game on the mobile terminal 130.

FIG. 10A is a signal flowchart illustrating an example operation of changing a platform for playing a cloud game from a TV to a mobile terminal in a game system.

Referring to FIG. 10A, in operation 1002, the TV 110 and the gamepad 120 may perform a connection establish operation. According to an example, the connection establish operation may include an operation of establishing a connection (or communication link) for communication between the TV 110 and the gamepad 120. According to an example, the TV 110 and the gamepad 120 may establish a connection based on Wi-Fi or Bluetooth communication.

In operation 1004, the TV 110 may receive a key input signal from the gamepad 120.

In operation 1006, the TV 110 may transmit the key input signal received from the gamepad 120 to the cloud middleware 160. According to an example, the cloud middleware 160 may relay communication between the cloud game server 140 and the user device (e.g., the TV 110 or the mobile terminal 130), and may manage and adjust various services, platforms, or resources in a cloud game environment.

In operation 1008, the cloud middleware 160 may receive a key input signal from the TV 110 and transmit the received key input signal to the cloud game server 140.

In operation 1010, the cloud game server 140 may receive a key input signal from the cloud middleware 160 and process the received key input signal.

In operation 1012, the cloud game server 140 may transmit the game data reflecting the processing result of the key input signal to the cloud middleware 160.

In operation 1014, the cloud middleware 160 may receive game data from the cloud game server 140 and transmit the received game data to the TV 110.

In operation 1016, the TV 110 may receive game data from the cloud middleware 160 and display a game screen based on the received game data.

According to an example, operations 1004 to 1016 may be repeatedly performed while the game is executed.

In operation 1018, the TV 110 may transmit a signal indicating that the game is being executed (or being played) to the mobile terminal 130. According to an example, if the game starts in the state of being connected to the mobile terminal 130, the TV 110 may transmit a signal indicating that the game is being played to the mobile terminal 130. According to an example, if the mobile terminal 130, capable of establishing communication, is found while the game is being executed, the TV 110 may perform connection with the mobile terminal 130. If the connection with the mobile terminal 130 is completed, the TV 110 may transmit to the mobile terminal 130 a signal indicating that the game is being played on the TV 110.

In operation 1020, the mobile terminal 130 may receive a signal indicating that the game is executed and display a continue game button based on the received signal. According to an example, the continue game button may be displayed on the mobile terminal 130 to provide an option (e.g., selection) to continue to play the game which has been executed (e.g., being played) on the TV 110. According to an example, the continue game button may be displayed in a form of being overlaid on the screen displayed on the mobile terminal 130. According to an example, the continue game button may be displayed as an opaque or translucent button having a set shape (e.g., a circle or a polygon). According to an example, the continue game button may be displayed at a set position on the screen of the mobile terminal 130 or at a position designated by the user. According to an example, the display position of the continue game button may be changed according to the user's selection. According to an example, the continue game button may be displayed as an icon for the user's touch input.

In operation 1022, the mobile terminal 130 may detect a touch input on the continue game button.

In operation 1024, the mobile terminal 130 may transmit a continue game request signal to the TV 110 based on the detected touch input.

In operation 1026, the TV 110 may receive the continue game request signal from the mobile terminal 130 and transmit the platform switch request signal to the cloud middleware 160. According to an example, the platform switch request signal may include information for switching the platform associated with the running game on the TV 110 to the mobile terminal 130. According to an example, the platform switch request signal may include information for releasing the connection between the TV 110 and the cloud game server 110 and requesting to establish a connection between the mobile terminal 130 and the cloud game server 110. According to an example, the platform switch request signal may include information about the mobile terminal 130. For example, the information about the mobile terminal 130 may include information necessary for connection with the mobile terminal 130, such as cloud account information, the media access control (MAC) address of the mobile terminal 130, or model information about the mobile terminal 130.

In operation 1028, the cloud middleware 160 may receive a platform switch request signal from the TV 110 and transmit the platform switch response signal to the TV 110 in response to the platform switch request signal. According to an example, the platform switch response signal may include information indicating that the connection with the TV 110 has ended or severed.

Following operation 1028 of FIG. 10A, the operations illustrated in FIG. 10B may be performed.

FIG. 10B is a signal flowchart illustrating an example operation related to continuously playing a cloud game through a mobile terminal in a game system.

Referring to FIG. 10B, in operation 1030, the cloud middleware 160 and the mobile terminal 130 may establish a connection. According to an example, the cloud middleware 160 may establish a connection with the mobile terminal 130 based on a platform switch request signal received in operation 1026 of FIG. 10A. For example, the cloud middleware 160 may obtain information (e.g., cloud account information, MAC address, or model information) about the mobile terminal 130 included in the platform switch request signal and transmit a connection request signal to the mobile terminal 130 corresponding to the obtained information. The mobile terminal 130 may complete the connection set up by transmitting a connection response signal to the cloud middleware 160 in response to the connection request signal of the cloud middleware 160. If the connection is established, the cloud middleware 160 and the mobile terminal 130 may communicate with each other.

In operation 1032, the cloud middleware 160 may receive game data from the cloud game server 140.

In operation 1034, the cloud middleware 160 may transmit the received game data to the mobile terminal 130.

In operation 1036, the mobile terminal 130 may receive game data from the cloud middleware 160 and display a game screen based on the received game data on the display of the mobile terminal 130.

In operation 1038, the mobile terminal 130 may receive gamepad connection information from the TV 110. According to an example, the gamepad connection information may include information necessary to establish a connection with the gamepad 120. For example, the gamepad connection information may include identification information (e.g., MAC address or model information) about the gamepad 120.

In operation 1040, the TV 110 may transmit the gamepad connection information to the mobile terminal 130 and end the connection with the gamepad 120.

In operation 1042, the mobile terminal 130 may establish a connection with the gamepad 120 based on the gamepad connection information. According to an example, the mobile terminal 130 may establish a connection with the gamepad 120 based on wireless communication such as Wi-Fi or Bluetooth communication. When the mobile terminal 130 is connected to the gamepad 120, the mobile terminal 130 may communicate with the gamepad 120.

According to an example, operations 1038 to 1042 may be performed immediately after operation 1030. For example, the connection establishment between the mobile terminal 130 and the gamepad 120, as shown in operations 1038 to 1042, may be performed after the connection establishment between the cloud middleware 160 and the mobile terminal 130 is completed.

In operation 1044, the mobile terminal 130 may receive a key input signal from the gamepad 120.

In operation 1046, the mobile terminal 130 may transmit the key input signal received from the gamepad 120 to the cloud middleware 160.

In operation 1048, the cloud middleware 160 may receive the key input signal from the cloud middleware 160 and transmit the received key input signal to the cloud game server 140.

In operation 1050, the cloud game server 140 may receive a key input signal from the cloud middleware 160 and process the received key input signal.

In operation 1052, the cloud game server 140 may transmit the game data, which includes the processing result of the key input signal, to the cloud middleware 160.

In operation 1054, the cloud middleware 160 may receive game data from the cloud game server 140 and transmit the received game data to the mobile terminal 130.

In operation 1056, the mobile terminal 130 may receive game data from the cloud middleware 160 and display a game screen based on the received game data.

According to an example, operations 1044 to 1056 may be repeatedly performed while the game is executed. According to an example, if a cloud game supporting a touch input is performed, the cloud game server 140 may process an event corresponding to the touch input. Accordingly, a touch input signal from the mobile terminal 130 may be transmitted to the cloud game server 140 through the cloud middleware 160. The cloud game server 140 may process the touch input signal and transmit the game data reflecting the processing result of the touch input signal to the mobile terminal 130 through the cloud middleware 160. The mobile terminal 130 may receive game data and display a game screen based on the received game data.

According to an example, the operation related to the touch input signal, as described above, may be performed together with, or separately from, the operation related to the key input signal as in operations 1044 to 1056.

In operation 1058, the TV 110 may perform a set function different from the game screen display function. According to an example, the set function may be one of a plurality of functions, such as a media display function, a video call function, a voice chat function, a web browsing function, a live TV function, or a game-related information search or sharing function, and may be performed according to the user's selection. According to an example, after operation 1026 or 1028 of FIG. 10A, the TV 110 may perform a function set at an arbitrary time point according to the user's selection.

Based on the operations of FIGS. 10A and 10B, if the user desires to stop playing a game on the TV 110, the user may seamlessly continue to play the game on the mobile terminal 130. For example, the user may watch media on the TV 110 and at the same time, continue to play the game, which the user has been playing on the TV 110, through the mobile terminal 130. If the user desires to play the game on the TV 110 again, the operations described in FIGS. 10A and 10B may be performed interchangeably. That is, the mobile terminal 130 may perform the operations of the TV 110 of FIGS. 10A and 10B, and the TV 110 may perform the operations of the mobile terminal 130 of FIGS. 10A and 10B. Based on this, the game executed on the mobile terminal 130 may be performed again on the TV 110.

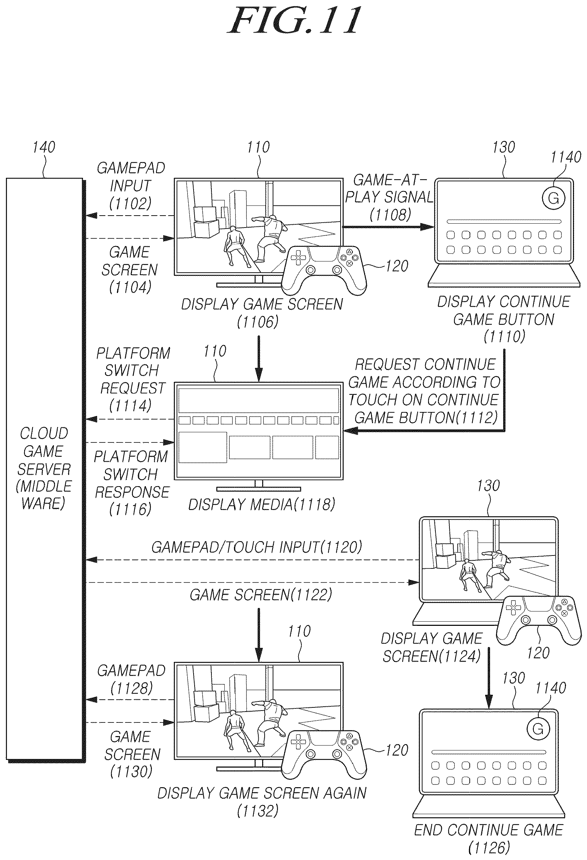

FIG. 11 is a view schematically illustrating an example operation of displaying, a cloud game being played on the TV, on a mobile terminal instead of on a TV in a game system.

Referring to FIG. 11, the TV 110 may communicate with the gamepad 120, the cloud middleware 160, and the cloud game server 140 while the game is executed. For example, the TV 110 may perform the following operations.

In operation 1102, the TV 110 may receive a key input signal according to the gamepad input of the user from the gamepad 120 and transmit the received key input signal to the cloud game server 140 through the cloud middleware 160.

In operation 1104, the TV 110 may receive game data from the cloud game server 140 in response to the key input signal transmitted to the cloud game server 140. The game data may include image data constituting a game screen.

In operation 1106, the TV 110 may display the game screen based on the received game data. Operations 1102 to 1106 may be repeatedly performed while the game is executed.

In operation 1108, the TV 110 may transmit a signal indicating that the game is being played on the TV 110 is to the mobile terminal 130. According to an example, if the game starts in the state of being connected to the mobile terminal 130, the TV 110 may transmit a signal indicating that the game is being played to the mobile terminal 130. According to an example, if the connection with the mobile terminal 130 is established while the game is executed, the TV 110 may transmit to the mobile terminal 130 a signal indicating that the game is being played.

In operation 1110, the mobile terminal 130 may receive a signal indicating that the mobile terminal 130 is playing the game and display a continue game button 1140. According to an example, the mobile terminal 130 may display the continue game button 1140 as a circular translucent icon. The mobile terminal 130 may display the continue game button 1140 to be overlaid on the screen displayed on the mobile terminal 130. However, this is merely an example, and the display method of the continue game button 1140 may be variously changed.

In operation 1112, if a touch input is detected through touching of the continue game button 1140, the mobile terminal 130 may transmit a game continue request signal to the TV 110.

In operation 1114, the TV 110 may transmit a platform switch request signal to the cloud middleware 160 based on the continue game request signal. According to an example, the platform switch request signal may include information for switching the platform associated with the running game on the TV 110 to the mobile terminal 130. For example, the platform switch request signal may include information (e.g., cloud account information, MAC address of the mobile terminal 130, or model information) necessary for establishing connection with the mobile terminal 130.

In operation 1116, the TV 110 may receive a platform switch response signal from the cloud middleware 160 in response to the platform switch request signal.

In operation 1118, the TV 110 may end the connection with the cloud game server 140 and/or the cloud middleware 160, based on the reception of the platform switch response signal, and perform other functions that may be provided by the TV 110, such as displaying media. According to an example, the TV 110 may transmit the connection information for the gamepad 120 to the mobile terminal 130 and end the connection with the gamepad 120.

According to an example, the mobile terminal 130 may be connected to the gamepad 120 based on the connection information for the gamepad 120. According to an example, the mobile terminal 130 may support a touch input. The mobile terminal 130 may transmit a key input signal from the gamepad 120 to the cloud game server 160 via the cloud middleware 160 or transmit a touch input signal from a screen of the mobile terminal 130 to the cloud game server 160 via the cloud middleware 160. According to an example, the user may execute a game based on a key input through the gamepad 120 and/or a touch input on the screen of the mobile terminal 130.

In operation 1120, the mobile terminal 130 may transmit a key input signal from the gamepad 120 and/or a touch input signal from the screen of the mobile terminal 130 to the cloud game server 160 through the cloud middleware 160.

In operation 1122, the mobile terminal 130 may receive the game data from the cloud game server 140 through the cloud middleware 160 in response to the key input signal and/or the touch input signal.

In operation 1124, the mobile terminal 130 may display a game screen based on the received game data. Operations 1120 to 1124 may be repeatedly performed while the game is executed.

In operation 1126, the game being played (or executed) may be terminated on the mobile terminal 130 by choosing to not continue playing the game (e.g., selection or expiration). According to an example, if the decision is made to not continue playing the game at the mobile terminal 130, it may mean that the mobile terminal 130 ends or severs the connection with the gamepad 120, the cloud middleware 160, or the cloud game server 140. According to an example, the continue game may be ended if the continue game button is touched a predetermined number of times or a separate end button is touched. According to an example, if the continue game is ended, the continue game button may or may not be continuously displayed on the display of the mobile terminal 130.

According to an example, in relation to the operation of ending the continue game at the mobile terminal 130, an operation of switching the platform from the mobile terminal 130 to the TV 110 and an operation of establishing connection between the TV 110 to the gamepad 120, the cloud middleware 160, or the cloud game server 140 may be performed. Based on this, in operation 1128, the TV 110 may receive a key input signal from the gamepad 120 and transmit the key input signal to the cloud game server 140 through the cloud middleware 160.

In operation 1130, the TV 110 may receive game data from the cloud game server 140 in response to the key input signal transmitted to the cloud game server 140.

In operation 1132, the TV 110 may display the game screen again based on the received game data. Operations 1128 to 1132 may be repeatedly performed while the game is executed.

Based on the above-described operations, the user may seamlessly play a game while alternately using two or more user devices (e.g., the TV 110 and the mobile terminal 130).

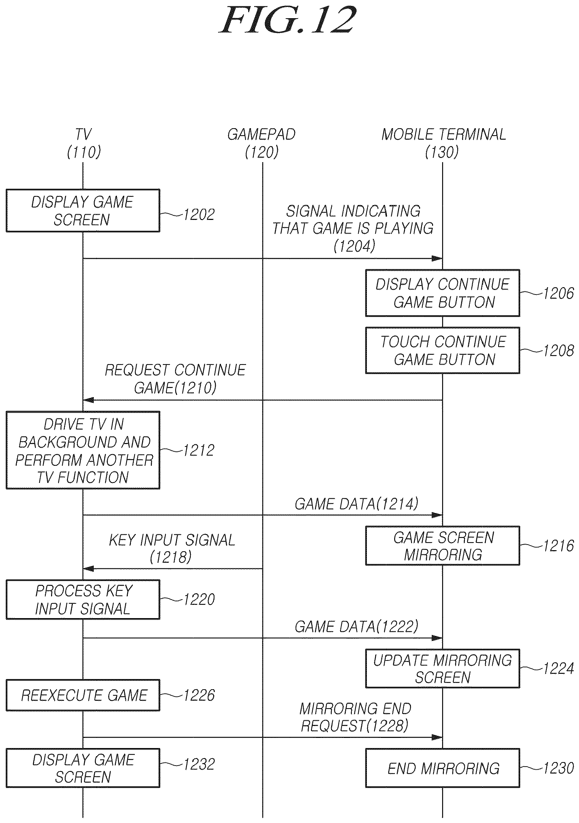

FIG. 12 is a signal flowchart illustrating an example operation for allowing a game being played on a TV to be played on a mobile terminal as the mobile terminal performs mirroring in a game system.

Referring to FIG. 12, in operation 1202, the TV 110 may display a game screen. According to an example, the game screen may be associated with a game being executed on the TV 110 and may not support execution on the mobile terminal 130. However, the operations of FIG. 12 may also be performed for the game that supports execution on the mobile terminal 130.

In operation 1204, the TV 110 may transmit to the mobile terminal 130 a signal indicating that the game is being played on the TV 110. According to an example, if the game starts in the state of being connected to the mobile terminal 130, the TV 110 may transmit to the mobile terminal 130 a signal indicating that the game is being played on the TV 110. According to an example, if the connection with the mobile terminal 130 is established while the game is executed, the TV 110 may transmit to the mobile terminal 130 a signal indicating that the game is being played on the TV 110.

In operation 1206, the mobile terminal 130 may receive a signal indicating that the game is being played on the TV 110 and display a continue game button.

In operation 1208, the mobile terminal 130 may detect a touch input on the continue game button.

In operation 1210, the mobile terminal 130 may transmit a continue game request signal to the TV 110 based on the detected touch input.

In operation 1212, the TV 110 may receive a continue game request signal from the mobile terminal 130 and execute (or run) the game in the background based on the received continue game request signal. The TV 110 may not display a game screen as the game is executed in the background. The TV 110 may execute the game in the background and perform other TV functions (e.g., media display, video call, voice chat, web browsing, live TV, or game-related information search or sharing function).

In operation 1214, the TV 110 may transmit game data for mirroring to the mobile terminal 130 in response to the continue game request signal.

In operation 1216, the mobile terminal 130 may receive game data and execute game screen mirroring based on the received game data.

In operation 1218, the TV 110 may receive a key input signal from the gamepad 120.

In operation 1220, the TV 110 may process a key input signal.

In operation 1222, the TV 110 may transmit to the mobile terminal 130 the game data with the result of the processed key input signal.

In operation 1224, the mobile terminal 130 may receive the game data and update the mirroring screen based on the received game data.

In operation 1226, the TV 110 may re-execute the game.

In operation 1228, the TV 110 may transmit a mirroring end request signal to the mobile terminal 130 based on the game being re-executed.

In operation 1230, the mobile terminal 130 may receive the mirroring end request signal and end the game screen mirroring operation based on the received mirroring end request signal.

In operation 1232, the TV 110 may display the game screen again based on the game being re-executed.

As described above, the TV 110 may execute the game in the background, and the mobile terminal 130 may display the mirrored game screen, so that the game may be played while viewing the game screen through the mobile terminal 130.

According to an example, if the mobile terminal 130 moves away from the TV 110 by more than a predetermined distance, the quality of the mirroring screen may be deteriorated. In consideration of this, if the mobile terminal 130 moves away from the TV 110 by more than a predetermined distance, the mobile terminal 130 may display a guide message or output a sound effect to provide notice to the mobile terminal 130 so as to encourage the mobile terminal 130 to remain within the predetermined distance from the TV 110.

According to an example, the mobile terminal 130 may support a touch input together with game screen mirroring. In this case, the mobile terminal 130 may transmit a touch input signal according to the touch input to the TV 110. The TV 110 may convert the touch input signal into a key input signal and process the converted key input signal, thereby allowing the game to be played or executed based on the touch input.

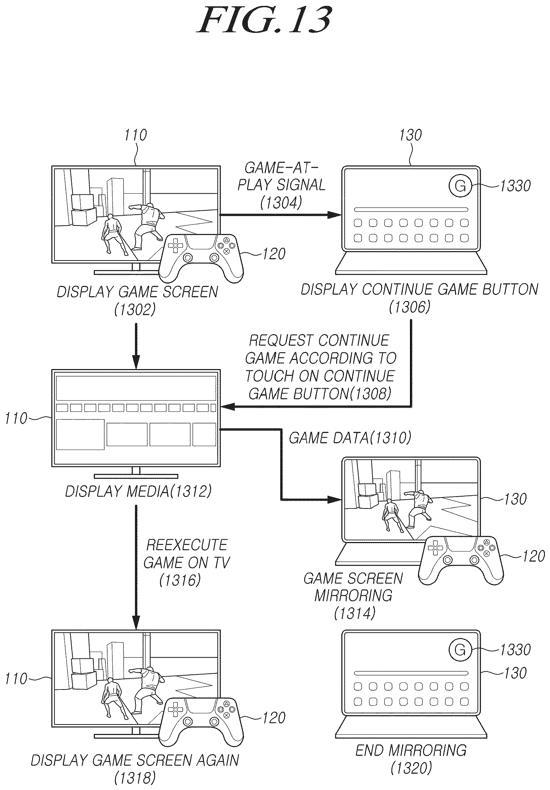

FIG. 13 is a view schematically illustrating an example operation for allowing a game being played on a TV to be played on a mobile terminal as the mobile terminal performs mirroring in a game system.

Referring to FIG. 13, in operation 1302, the TV 110 may execute a game and display a game screen.

In operation 1304, the TV 110 may transmit to the mobile terminal 130 a signal indicating that the game is being played on the TV 110.

In operation 1306, the mobile terminal 130 may receive a signal indicating that the game is being played on the mobile terminal 130 and display a continue game button 1330. According to an example, the mobile terminal 130 may display the continue game button 1330 as a circular translucent icon. The mobile terminal 130 may display the continue game button 1330 to be overlaid on the screen displayed on the mobile terminal 130. However, this is merely an example, and the display method of the continue game button 1330 may be variously changed.

In operation 1308, if a touch input as associated with the continue game button 1330 is detected, the mobile terminal 130 may transmit a game continue request signal to the TV 110.

In operation 1310, the TV 110 may receive a continue game request signal and transmit game data to the mobile terminal 130 in response to the received continue game request signal.

In operation 1312, the TV 110 may display another screen (e.g., a media screen) instead of the game screen. The TV 110 may execute the game in the background so that the game does not discontinue even when another screen is displayed.

In operation 1314, the mobile terminal 130 may receive game data from the TV 110 and perform game screen mirroring based on the received game data. According to an example, while the mobile terminal 130 performs game screen mirroring, game control using a key input on the gamepad 120 and/or a touch input on the screen of the mobile terminal 130 may be performed. Since the gamepad 120 is connected to the TV 110 and the game is running on the TV 110, the key input signal from the gamepad 120 and/or the touch input signal from the mobile terminal 130 may be transmitted to the TV 110 and processed. The mobile terminal 130 may receive the game data reflecting the processing result of the key input signal and/or the touch input signal from the TV 110, and update and display the mirroring screen. According to an example, the TV 110 may convert the touch input signal into a key input signal and process the key input signal.

In operation 1316, the TV 110 may re-execute the game according to the user's selection.

In operation 1318, when the game is re-executed, the TV 110 may transmit a mirroring end signal to the mobile terminal 130 and display the game screen again.

In operation 1320, the mobile terminal 130 may receive the mirroring end signal from the TV 110 and end the game screen mirroring operation based on the received mirroring end signal.

The operations of FIGS. 2A to 13 are not limited to the illustrated order but may be performed in various orders. More or fewer operations may be performed than the operations illustrated in FIGS. 2A to 13. The operations of FIGS. 2A to 13 may be performed in combination.

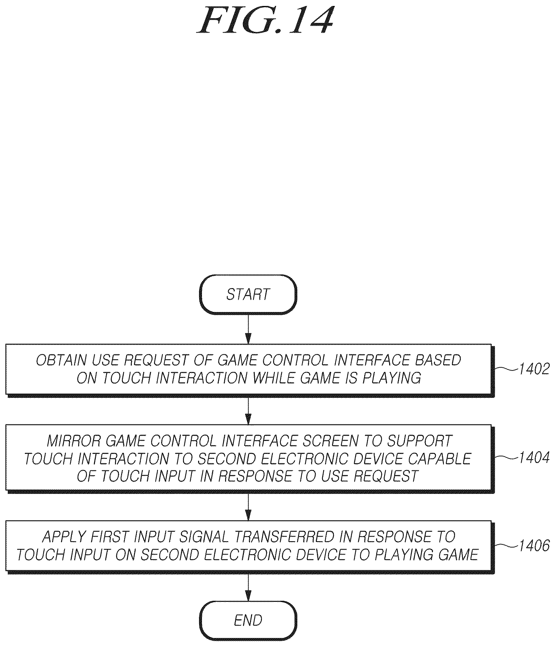

FIG. 14 is a flowchart illustrating example operations of a first electronic device in a game system.

Referring to FIG. 14, in operation 1402, a first electronic device (e.g., the TV 110) may obtain a request for using a game control interface based on a touch interaction while a game is being played.

According to an example, the first electronic device may output a game screen as the game is played, may determine whether the game screen is a game control interface screen, may transmit a mirroring request to a second electronic device based on the game screen being the game control interface screen, and may obtain a use request by receiving a response to the mirroring request from the second electronic device.

According to an example, the first electronic device may determine whether the game screen is the game control interface screen based on whether the game screen has items of a specific shape arranged to form a repeated pattern or whether the game screen includes an item requiring a user input or selection.

According to one example, the first electronic device may pause the game screen based on receiving a response to the mirroring request.

In operation 1404, the first electronic device may mirror the game control interface screen to support a touch interaction to a second electronic device (e.g., the mobile terminal 130) capable of touch input in response to the use request.

In operation 1406, the first electronic device may apply a first input signal transmitted in response to a touch input to the second electronic device to playing the game.

According to an example, the first electronic device may transmit the first input signal to a game server (e.g., the cloud game server 140) and output the game screen based on game information received from the game server in response to the first input signal.

According to an example, the first electronic device may receive a mirroring end request from the second electronic device and end mirroring of the game control interface screen to the second electronic device in response to receiving the mirroring end request.

According to an example, the first electronic device may convert the first input signal into a second input signal supported by an input device (e.g., the gamepad 120) incapable of the touch input and play the game based on the second input signal to output the game screen.

According to an example, the first electronic device may detect a repeated pattern formed by arrangement of items of a specific shape in a repeated structure on the game control interface screen, identify a type of a list formed by the detected repeated pattern, obtain a focused position in the identified type of the list, obtaining a target focus position based on the first input signal in the identified type of the list, generate key input information based on information about a key controllable in the identified type of the list, the focused position, or the target focus position, and generate the second input signal based on the generated key input information.

According to an example, the first electronic device may compare a focus position corresponding to the generated key input information with the target focus position and if the focus position corresponding to the generated key input information corresponds to the target focus position, generate the second input signal based on the generated key input information.

According to an example, the first electronic device, if the focus position corresponding to the generated key input information does not correspond to the target focus position, may repeat the conversion of the first input signal into the second input signal a preset number of times or transmitting a message indicating that touch input processing may not be performed to the second electronic device.

According to an example, the first electronic device may receive a screenshot request signal from the second electronic device, obtain a screenshot image by capturing a game screen displayed on the first electronic device based on the screenshot request signal, and transmit the obtained screenshot image to the second electronic device.

According to an example, the first electronic device may receive a continue game request signal from the second electronic device, transmit a platform switch request signal including information about the second electronic device to middleware (e.g., the cloud middleware 160) connected with the first electronic device and a game server to switch a platform for playing the game from the first electronic device to the second electronic device based on the continue game request signal and, when receiving a response signal to the platform switch request signal from the middleware, end the connection with the middleware and transmitting connection information for connecting with an input device incapable of the touch input to the second electronic device.

According to an example, the first electronic device may mirror a game play screen associated with the game to the second electronic device, receive a second input signal from an input device incapable of the touch input, obtain a game play screen updated based on the second input signal, and mirror the updated game play screen to the second electronic device.

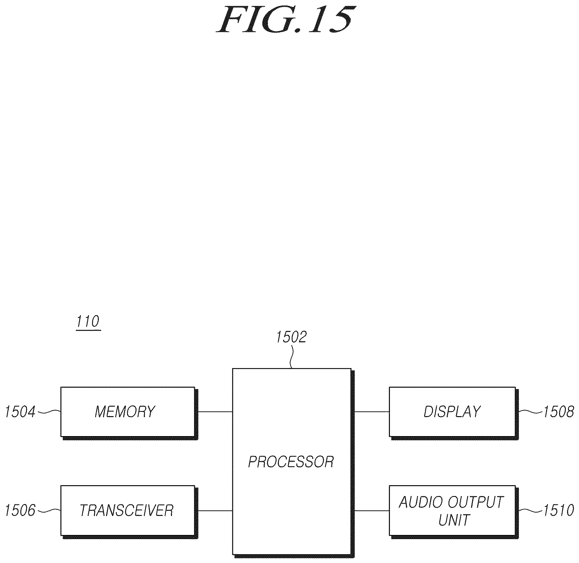

FIG. 15 is a block diagram illustrating an example configuration of a first electronic device in a game system.

Referring to FIG. 15, a first electronic device (e.g., a TV) 110 may include a processor 1502, memory 1504, a transceiver 1506, a display 1508, and an audio output unit 1510. According to an example, the first electronic device 110 may include an additional component (e.g., a vibration module or a haptic module) other than the illustrated components or may omit at least one of the illustrated components.

According to an example, the memory 1504 may store various pieces of information or data (e.g., game data) by the operation of the first electronic device 110 and store at least one program.

According to an example, the transceiver 1506 may perform communication with an input device (e.g., the gamepad 120), a second electronic device (e.g., the mobile terminal 130), a game server (e.g., the cloud game server 140), middleware (e.g., the cloud middleware 160), or other entities. The transceiver 1506 may support various technologies for wired or wireless communication. For example, as a technology for wireless communication, the transceiver 1506 may support a short-range communication technology such as Wi-Fi or Bluetooth and/or a broadband communication technology such as LTE, LTE-A, or NR communication.

According to an example, the display 1508 may perform various display operations according to the functions of the first electronic device 110. For example, the display 1508 may display a media or web browser or display a game play screen or a game control interface screen.

According to an example, the audio output unit 1510 may decode a game sound signal to convert an electrical signal into a sound signal. The audio output unit 1510 may output the sound signal through a speaker or an earphone.

According to an example, the processor 1502 may be electrically connected to the display 1508, the memory 1504, the transceiver 1506, or the audio output unit 1510, and may execute one or more instructions of a program stored in the memory 1504.

According to an example, the processor 1502 may perform the above-described operations of the TV 110.

According to an example, the processor may obtain a use request for a game control interface based on a touch interaction while a game is playing.

According to an example, the processor 1502 may output a game screen according to play of the game to the display 1508, determine whether the game screen is a game control interface screen, transmit a mirroring request to the second electronic device based on the game screen being the game control interface screen, and obtain a use request by receiving a response to the mirroring request from the second electronic device.

According to an example, the processor 1502 may determine whether the game screen is the game control interface screen based on whether the game screen include items of a specific shape arranged to form a repeated pattern or whether the game screen includes an item requiring a user input or selection.

According to one example, the processor 1502 may pause the game screen based on receiving a response to the mirroring request.

According to an example, the processor 1502 may mirror the game control interface screen to support a touch interaction to a second electronic device (e.g., the mobile terminal 130) capable of touch input in response to the use request.

According to an example, the processor 1502 may apply a first input signal transferred in response to a touch input to the second electronic device to playing the game.

According to an example, the processor 1502 may transfer the first input signal to a game server (e.g., the cloud game server 140) and output the game screen based on game information received from the game server in response to the first input signal.

According to an example, the processor 1502 may receive a mirroring end request from the second electronic device and end mirroring of the game control interface screen to the second electronic device in response to receiving the mirroring end request.

According to an example, the processor 1502 may convert the first input signal into a second input signal supported by an input device (e.g., the gamepad 120) incapable of the touch input and play the game based on the second input signal to output the game screen.

According to an example, the processor 1502 may detect a repeated pattern formed by arrangement of items of a specific shape in a repeated structure on the game control interface screen, identify a type of a list formed by the detected repeated pattern, obtain a focused position in the identified type of the list, obtaining a target focus position based on the first input signal in the identified type of the list, generate key input information based on information about a key controllable in the identified type of the list, the focused position, or the target focus position, and generate the second input signal based on the generated key input information.

According to an example, the processor 1502 may compare a focus position corresponding to the generated key input information with the target focus position and if the focus position corresponding to the generated key input information corresponds to the target focus position, generate the second input signal based on the generated key input information.

According to an example, the processor 1502, if the focus position corresponding to the generated key input information does not correspond to the target focus position, may repeat the conversion of the first input signal into the second input signal a preset number of times or transmitting a message indicating that touch input processing may not be performed to the second electronic device.

According to an example, the processor 1502 may receive a screenshot request signal from the second electronic device, obtain a screenshot image by capturing a game screen displayed on the display 1508 based on the screenshot request signal, and transmit the obtained screenshot image to the second electronic device.

Accordingly, a touch input signal from the mobile terminal 130 may be transmitted to the cloud game server 140 through the cloud middleware 160.

According to an example, the processor 1502 may mirror a game play screen associated with the game to the second electronic device, receive a second input signal from an input device incapable of the touch input, obtain a game play screen updated based on the second input signal, and mirror the updated game play screen to the second electronic device.

An electronic device (e.g., the electronic device 110 or the second electronic device 130) according to various embodiments of the disclosure may be various types of devices. The electronic devices may include, for example, a portable communication device (e.g., a smartphone), a computer device, a portable multimedia device, a portable medical device, a camera, a wearable device, or a home appliance. The electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A method for supporting game play at a first electronic device (110), the method comprising:
obtaining (1402) a request for a game control interface to support a touch interaction while a game is playing;
mirroring (1404) a game control interface screen (500) associated with the game control interface to a second electronic device (130), in response to the request; and
applying (1406) a first input signal provided in response to a touch input at the second electronic device (130) to control the game.

2. The method of claim 1, wherein obtaining the request comprises:
outputting a game screen at the first electronic device (110);
determining whether the game screen is the game control interface screen (500);
transmitting (216, 310, 414) a mirroring request to the second electronic device (130) based on the game screen being the game control interface screen (500); and
receiving (232, 314, 426) a response to the mirroring request from the second electronic device (130).

3. The method of claim 2, further comprising pausing (316) the game screen based on receiving the response to the mirroring request.

4. The method of claim 2, wherein determining whether the game screen is the game control interface screen (500) is based on determining whether the game screen includes items of a specific shape arranged to form a repeated pattern or whether the game screen includes an item requiring a input or selection.

5. The method of claim 1, wherein applying the first input signal to control the game comprises:
transferring (322) the first input signal to a game server (140); and
outputting (316) a game screen based on game information received from the game server (140) in response to the first input signal.

6. The method of claim 1, further comprising:
receiving (256, 448) a mirroring end request from the second electronic device (130); and
terminating (258, 450) mirroring of the game control interface screen (500) to the second electronic device (130) in response to receiving the mirroring end request.

7. The method of claim 1, wherein applying the first input signal to control the game comprises:
converting the first input signal into a second input signal supported by an input device (120) incapable of touch input; and
controlling the game based on the second input signal.

8. The method of claim 7, wherein converting the first input signal into the second input signal comprises:
detecting (602) a repeated pattern formed by arrangement of items of a specific shape in a repeated structure on the game control interface screen (500);
identifying (604) a type of a list formed by the detected repeated pattern;
obtaining (610, 702) a focused position in the identified type of the list;
obtaining (706) a first focus position based on the first input signal in the identified type of the list;
generating (710) key input information based on information about a key controllable in the identified type of the list, the focused position, or the first focus position; and
generating (716) the second input signal based on the generated key input information.

9. The method of claim 8, wherein generating the second input signal comprises:
comparing (712) a second focus position corresponding to the generated key input information with the first focus position;
based on the second focus position corresponding to the first focus position, generating (716) the second input signal based on the generated key input information; and
based on the second focus position not corresponding to the first focus position, repeating (718) the conversion of the first input signal into the second input signal a preset number of times or transmitting (720) a message indicating that touch input processing is impossible, to the second electronic device (130).

10. The method of claim 1, further comprising:
receiving (810, 908) a screenshot request signal from the second electronic device (130);
obtaining (812, 910) a screenshot image by capturing a game screen displayed on the first electronic device (110) based on the screenshot request signal; and
transmitting (814, 912) the obtained screenshot image to the second electronic device (130).

11. The method of claim 1, further comprising:
receiving (1024) a continue game request signal from the second electronic device (130);
transmitting (1026) a platform switch request signal including information about the second electronic device (130) to middleware (160) connected with the first electronic device (110) and a game server (140) to switch a platform for playing the game from the first electronic device (110) to the second electronic device (130) based on the continue game request signal; and
based on (1028) a response signal to the platform switch request signal being received from the middleware (160), terminating the connection with the middleware (160) and transmitting (1038) connection information for connecting with an input device (120) incapable of touch input to the second electronic device (130).

12. The method of claim 1, further comprising:
mirroring (1214) a game play screen associated with the game to the second electronic device (130);
receiving (1218) a second input signal from an input device (120) incapable of touch input;
obtaining (1220) a game play screen updated based on the second input signal; and
mirroring (1222) the updated game play screen to the second electronic device (130).

13. A first electronic device (110), comprising:
a display (1508);
a transceiver (1506) configured to perform communication with a second electronic device (130);
memory (1504) configured to store at least one program; and
at least one processor (1502) configured to execute at least one instruction of a program stored in the memory (1504), wherein the at least one processor (1502) is configured to:
obtain a request for a game control interface to support a touch interactionwhile a game is playing;
mirror a game control interface screen (500) associated with the game control interface to the second electronic device (130), in response to the request; and
apply a first input signal provided in response to a touch input at the second electronic device (130) to control the game.

14. The first electronic device of claim 13, wherein the at least one processor (1502) is configured to perform a method according to any one of claims 2 to 12.
